# EUROPÄISCHE PATENTSCHRIFT

(11) **EP 1 236 368 B1**
(45) Veröffentlichungstag und Bekanntmachung des Hinweises auf die Patenterteilung: **21.10.2009**
(21) Anmeldenummer: 00956059.0
(22) Anmeldetag: 30.06.2000
(51) Int. Cl.: H04W 36/14, H04L 27/36

(54) **VERFAHREN ZUR ÜBERTRAGUNG VON SIGNALISIERUNGSINFORMATIONEN, SENDESTATION, MOBILSTATION UND NACHRICHTENELEMENTE**
METHOD FOR TRANSMITTING SIGNALLING INFORMATION, A MASTER STATION, A MOBILE STATION AND MESSAGE ELEMENTS
PROCEDE DE TRANSMISSION D'INFORMATIONS DE SIGNALISATION, STATION D'EMISSION, STATION MOBILE ET ELEMENTS DE MESSAGE

(30) Priorität: 30.08.1999 DE 19941432; 08.09.1999 DE 19942768
(43) Veröffentlichungstag der Anmeldung: 04.09.2002
(73) Patentinhaber: IPCom GmbH & Co. KG, 82049 Pullach (DE)
(72) Erfinder: HANS, Martin, D-31141 Hildesheim (DE); LAUMEN, Josef, D-31141 Hildesheim (DE); BECKMANN, Mark, D-31789 Hameln (DE); DEICHMANN, Volker, D-31137 Hildesheim (DE)
(74) Vertreter: Gigerich, Jan
(86) Internationale Anmeldenummer: PCT/DE2000/002128
(87) Internationale Veröffentlichungsnummer: WO 2001/017303

(56) Entgegenhaltungen:
- EP-A- 0 888 026
- WO-A-98/23122
- WO-A-98/28888
- WO-A-99/35872

## Beschreibung

### Stand der Technik

Die Erfindung geht von einem Verfahren zur Übertragung von Signalisierungsinformationen zwischen einer Sendestation und einer Empfangsstation, von einer Sendestation, von einer Empfangsstation und von Nachrichtenelementen nach der Gattung der unabhängigen Ansprüche aus.

Aus EP 0888026 A2 ist ein Verfahren bekannt, in dem Zusatzinformationen mit den Signalisierungsinformationen zwischen der Sendestation, insbesondere einer Basisstation, und Empfangsstation, insbesondere einer Mobilstation, übertragen werden. Dabei beziehen sich diese Zusatzinformationen auf die Dienstgüte, die von einer Basisstation angeboten wird.

Aus WO 98/06226 A2 ist ein Verfahren bekannt, bei dem zwischen Mobile Switching Centers (MSCs) in Signalisierungsnachrichten eine Information übertragen wird, welche signalisiert, ob das zu übertragende Sprachsignal kodiert wird und gegebenenfalls mit welcher Qualität die Kodierung des Sprachsignals durchgeführt wird.

Aus der Veröffentlichung "RRC Protocol Specification", TS 25.331 v.1.1.0, 3 GPP TSG RAN WO 1) ist es bereits bekannt, Signalisierungsinformationen zwischen einer Basisstation und einer Mobilstation zu übertragen, um mindestens einen Übertragungskanal zwischen der Basisstation und der Mobilstation einzurichten, der speziell einem Datenaustausch zwischen der Basisstation und der Mobilstation gewidmet ist. Für einen solchen Übertragungskanal kann die Impulsantwort geschätzt und die geschätzte Impulsantwort zur Vorverzerrung des zu sendenden Signals verwendet werden, so daß in der empfangenden Station Mittel zur Entzerrung eingespart werden können. Ein solches Verfahren zur Vorverzerrung ist das aus der Veröffentlichung "Summary of Joint Predistortion", TSGRAN WG1 bekannte Joint Predistortion Verfahren.

Bei der Verwendung eines solchen Vorverzerrungsverfahrens für die Übertragung von Daten über den speziell eingerichteten Datenkanal von der Basisstation zur Mobilstation gemäß der genannten Veröffentlichung "RRC Protocol Specification" ergibt sich dabei das Problem, daß in der Mobilstation nicht bekannt ist, ob die Basisstation die Daten über den mindestens einen speziell zugewiesenen Übertragungskanal vorverzerrt überträgt oder nicht. Auf diese Weise kann die Mobilstation nicht entscheiden, ob sie die von der Basisstation über den speziell eingerichteten Übertragungskanal empfangenen Daten entzerren muß oder nicht.

### Vorteile der Erfindung

Das erfindungsgemäße Verfahren zur Übertragung von Signalisierungsinformationen, die erfindungsgemäße Sendestation und die erfindungsgemäße Empfangsstation mit den Merkmalen der entsprechenden unabhängigen Ansprüche haben demgegenüber den Vorteil, daß mit den Signalisierungsinformationen eine dritte Nachricht von der Sendestation an die Empfangsstation übertragen wird, die eine Information darüber enthält, ob in der Sendestation oder in einer nachfolgend der Empfangsstation zugeordneten weiteren Sendestation eine Aufbereitung von zu sendenden Daten zur Erhöhung der Empfangsqualität dieser Daten an der Empfangsstation durchgeführt wird. Auf diese Weise kann die Empfangsstation vor Einrichtung eines Übertragungskanals von der Sendestation zur Empfangsstation entscheiden, wie sie die von der Sendestation oder die von der nachfolgend der Empfangsstation zugeordneten weiteren Sendestation zu sendenden Daten detektieren muß, um einen optimalen Datenempfang gewährleisten zu können. Stellt die Empfangsstation dabei fest, daß die von der entsprechenden Sendestation zu sendenden Daten in der entsprechenden Sendestation bereits aufbereitet wurden, so kann sie auf eine aufwendige Entzerrung verzichten, da die Daten mit einer entsprechend erhöhten Empfangsqualität an der Empfangsstation ankommen. Auf diese Weise kann der Leistungsverbrauch an der Empfangsstation minimiert werden, was besonders bei Ausbildung der Empfangsstation als mobile Station mit Akkumulatorbetrieb von Vorteil ist.

Durch die in den Unteransprüchen aufgeführten Maßnahmen sind vorteilhafte Weiterbildungen und Verbesserungen des Verfahrens, der Sendestation und der Empfangsstation gemäß den entsprechenden unabhängigen Ansprüchen möglich.

Dabei ist es besonders vorteilhaft, daß mit der dritten Nachricht eine Information darüber von der Sendestation an die Empfangsstation übertragen wird, welcher Art die Aufbereitung der zu sendenden Daten ist. Auf diese Weise läßt sich die in der Empfangsstation gegebenenfalls erforderliche Entzerrung weiter differenzieren, so daß die Entzerrung in der Empfangsstation für den einzurichtenden Übertragungskanal optimal an die Aufbereitung der zu sendenden Signale angepaßt werden kann. Auf diese Weise ist eine weitere Optimierung bzw. Minimierung des Leistungsverbrauchs in der Empfangsstation realisierbar. Außerdem kann eine fehlerhafte Entzerrung, die nicht an die Art der Aufbereitung der zu sendenden Daten angepaßt ist, vermieden werden.

Ein weiterer Vorteil besteht darin, daß die dritte Nachricht bezüglich mehrerer Übertragungskanäle für die Übertragung der zu sendenden Daten übertragen wird, wenn die Art der Aufbereitung in diesen Übertragungskanälen gleich ist. Auf diese Weise kann die für die Übertragung der dritten Nachricht erforderliche Datenmenge minimiert werden.

Ein weiterer Vorteil besteht darin, daß mit den Signalisierungsinformationen vor der dritten Nachricht eine zweite Nachricht von der Empfangsstation zur Sendestation übertragen wird, die eine Information darüber enthält, welche Art oder welche Arten von Aufbereitung der von der Sendestation zu sendenden Daten von der Empfangsstation zur Detektion dieser Daten unterstützt wird bzw. unterstützt werden. Auf diese Weise kann verhindert werden, daß die Sendestation die an die Empfangsstation zu sendenden Daten in einer Weise aufbereitet, in der sie von der Empfangsstation nicht oder nur eingeschränkt entzerrt werden können. Vielmehr kann die Sendestation die Aufbereitung der an die Empfangsstation zu sendenden Daten an die von der Empfangsstation unterstützten Detektions- oder Entzerrungsmechanismen anpassen, um eine optimale Übertragung zu gewährleisten.

Ein weiterer Vorteil besteht darin, daß als zu sendende Daten die Signalisierungsinformationen von der Sendestation zur Empfangsstation frühestens dann aufbereitet übertragen werden, wenn anhand der zweiten Nachricht die von der Empfangsstation unterstützte Art bzw. die von der Empfangsstation unterstützten Arten der Aufbereitung bei der Sendestation bekannt sind, wobei die Aufbereitung in einer von der Empfangsstation unterstützten Art erfolgt, und wenn die dritte Nachricht an die Empfangsstation abgesetzt wurde. Auf diese Weise können bereits Signalisierungsinformationen vor Einrichten des speziellen Übertragungskanals von der Sendestation zur Empfangsstation in der Sendestation so aufbereitet werden, daß ihre Empfangsqualität an der Empfangsstation erhöht wird und somit in der Empfangsstation weniger Aufwand für deren Entzerrung erforderlich ist, so daß möglichst frühzeitig Entzerrungsaufwand in der Empfangsstation und damit Leistungsverbrauch eingespart werden kann.

Ein weiterer Vorteil besteht darin, daß mit den Signalisierungsinformationen vor der dritten Nachricht eine erste Nachricht von der Sendestation zur Empfangsstation übertragen wird, die eine Information darüber enthält, welche Art oder welche Arten von Aufbereitung der zu sendenden Daten von der Sendestation unterstützt wird bzw. unterstützt werden. Auf diese Weise kann die Empfangsstation eine Aufbereitungsart der zu sendenden Daten auswählen und die ausgewählte Aufbereitungsart mittels der zweiten Nachricht der Sendestation bekannt machen. Die Auswahl kann dabei von der Empfangsstation so getroffen werden, daß eine für sie möglichst günstige, Aufwand und Leistung sparende Detektion und Entzerrung der von der Sendestation zu sendenden Daten ermöglicht wird.

Die erste Nachricht, die zweite Nachricht und die dritte Nachricht lassen sich jeweils mittels eines Nachrichtenelementes gemäß den entsprechenden unabhängigen Ansprüchen zwischen der Sendestation und der Empfangsstation versenden und lassen sich dadurch in vorteilhafter Weise besonders einfach in ein schon bestehendes Signalisierungsprotokoll integrieren.

### Zeichnung

Ausführungsbeispiele der Erfindung sind in der Zeichnung dargestellt und in der nachfolgenden Beschreibung näher erläutert. Es zeigen Figur 1 ein Blockschaltbild einer erfindungsgemäßen Sendestation und einer erfindungsgemäßen Empfangsstation, Figur 2 einen Ablaufplan für den Austausch von Signalisierungsinformationen gemäß einer ersten Ausführungsform, Figur 3 einen Ablaufplan für den Austausch von Signalisierungsinformationen gemäß einer zweiten Ausführungsform, Figur 4 einen Ablaufplan für den Austausch von Signalisierungsinformationen gemäß einer dritten Ausführungsform, Figur 5 einen Ablaufplan für den Austausch von Signalisierungsinformationen gemäß einer vierten Ausführungsform und Figur 6 eine Anordnung der erfindungsgemäßen Empfangsstation in einem zellularen Mobilfunknetz vor einer Übergabe von der Sendestation zu einer weiteren Sendestation.

### Beschreibung der Ausführungsbeispiele

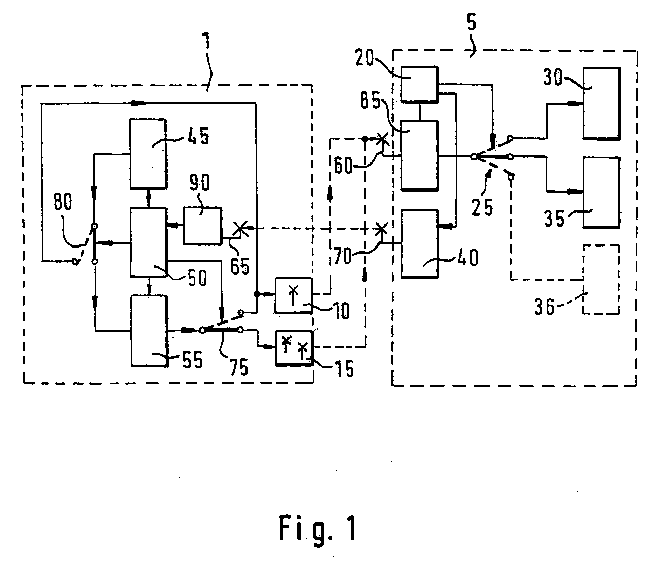

In Figur 1 kennzeichnet 1 eine Sendestation eines Telekommunikationsnetzes, die drahtlos oder drahtgebunden ausgebildet sein kann. Weiterhin kennzeichnet in Figur 1 das Bezugszeichen 5 eine Empfangsstation des Telekommunikationsnetzes, die ebenfalls drahtlos oder drahtgebunden ausgebildet sein kann. Zwischen der Sendestation 1 und der Empfangsstation 5 soll nun mindestens ein Übertragungskanal eingerichtet werden, der entsprechend der Ausbildung der Sendestation 1 und der Empfangsstation 5 ebenfalls drahtlos oder drahtgebunden sein kann. Über diesen mindestens einen Übertragungskanal sollen dann Daten von der Sendestation 1 zur Empfangsstation 5 übertragen werden, wobei der mindestens eine Übertragungskanal speziell dieser Datenübertragung von der Sendestation 1 zur Empfangsstation 5 gewidmet ist. Für die Übertragung von Daten der Sendestation 1 zu anderen, in Figur 1 nicht dargestellten Empfangsstationen kann jeweils mindestens ein eigener Übertragungskanal eingerichtet werden. Ein solcher, der Übertragung von Daten der Sendestation 1 zu einer speziellen Empfangsstation gewidmeter Übertragungskanal wird auch als "Dedicated Channel" oder "Gewidmeter Übertragungskanal" bezeichnet. Wenn im folgenden von einem Übertragungskanal die Rede ist, so ist darunter ein solcher "gewidmeter Übertragungskanal" zu verstehen. Zur Bildung eines solchen gewidmeten Kanals können eine oder mehrere physikalische Ressourcen herangezogen werden. Bei diesen physikalischen Ressourcen kann es sich um eine Frequenz, eine Zeitdauer, beispielsweise in Form eines Zeitschlitzes, einen Raumsektor, beispielsweise im Abstrahlbereich einer Antenne, einen Code oder dergleichen handeln. Versorgt die Sendestation 1 mehrere Empfangsstationen mit Daten, so können die einzelnen Übertragungskanäle von der Sendestation 1 gemultiplext werden, wobei die einzelnen Empfangsstationen auf den ihnen jeweils zugeordneten Übertragungskanal je nach den verwendeten physikalischen Ressourcen gemäß einem entsprechenden Kanalzugriffsverfahren zugreifen können, um die von der Sendestation 1 an sie gesendeten Daten zu empfangen. Je nach verwendeten physikalischen Ressourcen kann es sich bei dem Kanalzugriffsverfahren dann entsprechend um ein Frequenzvielfachzugriffs- oder FDMA-Verfahren (Frequency Division Multiple Access), ein Zeitvielfachzugriffs- oder TDMA-Verfahren (Time Division Multiple Access), ein Raumvielfachzugriffs- oder SDMA-Verfahren (Space Division Multiple Access), ein Codevielfachzugriffs- oder CDMA-Verfahren (Code Division Multiple Access), um beliebige Kombinationen aus den oben genannten Verfahren oder dergleichen handeln.

Im folgenden soll nun beispielhaft angenommen werden, daß die Sendestation 1 als Basisstation und die Empfangsstation 5 als Mobilstation eines Mobilfunknetzes ausgebildet sind. Der mindestens eine zwischen der Basisstation 1 und der Mobilstation 5 einzurichtende Übertragungskanal ist dann als Funkkanal ausgebildet. Das Mobilfunknetz, die Basisstation 1 und die Mobilstation 5 können beispielsweise nach dem GSM-Standard (Global System for Mobile Communications), nach dem UMTS-Standard (Universal Mobile Telecommunication System) oder dergleichen ausgebildet sein. Im folgenden soll beispielhaft angenommen werden, daß das Mobilfunknetz, die Basisstation 1 und die Mobilstation 5 nach dem UMTS-Standard ausgebildet sind. Dem Mobilfunknetz nach UMTS-Standard soll dabei ein CDMA-System im TDD-Betrieb (Time Division Duplex) zugrundeliegen. Dabei wird zwischen der Basisstation 1 und der Mobilstation 5 eine Halbduplexverbindung eingerichtet, die für die Übertragung von der Basisstation 1 zur Mobilstation 5 und von der Mobilstation 5 zur Basisstation 1 jeweils unterschiedliche Zeitschlitze vorsieht. Für die Übertragung von der Basisstation 1 zur Mobilstation 5 ist dabei mindestens ein Zeitschlitz vorgesehen. Die in diesem Zeitschlitz von der Basisstation 1 zur Mobilstation 5 übertragenen Daten sind dabei gemäß einem CDMA-Code codiert und auf eine Trägerfrequenz aufmoduliert. Der CDMA-Code, der Zeitschlitz und die Trägerfrequenz stellen dabei jeweils eine physikalische Ressource dar, deren Kombination den Übertragungskanal von der Basisstation 1 zur Mobilstation 5 bildet. Die Mobilstation 5 umfaßt eine erste Empfangseinheit 85, die über erste Auswahlmittel 25 wahlweise mit ersten Detektionsmitteln 30 oder mit zweiten Detektionsmitteln 35 verbindbar ist. An die erste Empfangseinheit 85 sind erste Auswertemittel 20 angeschlossen. Die ersten Auswertemittel 20 steuern erste Nachrichtenerzeugungsmittel 40 und die ersten Auswahlmittel 25 der Mobilstation 5 an. An die erste Empfangseinheit 85 ist eine erste Empfangsantenne 60 und an die ersten Nachrichtenerzeugungsmittel 40 ist eine Sendeantenne 70 der Mobilstation 5 angeschlossen. Die erste Empfangsantenne 60 und die Sendeantenne 70 der Mobilstation 5 können auch beispielsweise über eine Antennenweiche miteinander kombiniert und zu einer gemeinsamen Sende- /Empfangsantenne zusammengefaßt sein. Die Basisstation 1 umfaßt zweite Auswertemittel 50, die zweite Nachrichtenerzeugungsmittel 45 und eine Aufbereitungseinheit 55 ansteuern. An die zweiten Auswertemittel 50 ist über eine zweite Empfangseinheit 90 eine zweite Empfangsantenne 65 angeschlossen. Die Aufbereitungseinheit 55 ist über zweite Auswahlmittel 75 wahlweise mit einer ersten Antenneneinheit 10 oder mit einer zweiten Antenneneinheit 15 verbindbar. Die zweiten Nachrichtenerzeugungsmittel 45 sind über dritte Auswahlmittel 80 wahlweise mit der ersten Antenneneinheit 10 oder mit der Aufbereitungseinheit 55 verbindbar. Die ersten Auswahlmittel 25, die zweiten Auswahlmittel 75 und die dritten Auswahlmittel 80 können jeweils gemäß Figur 1 als steuerbarer Schalter ausgebildet sein, wobei die ersten Auswahlmittel 25 von den ersten Auswertemitteln 20 und die zweiten Auswahlmittel 75 und die dritten Auswahlmittel 80 von den zweiten Auswertemitteln 50 angesteuert werden. Die erste Antenneneinheit 10 ist als einzelne Sendeantenne ausgebildet. Die zweite Antenneneinheit 15 umfaßt mindestens zwei Sendeantennen und ermöglicht die Abstrahlung von Signalen in einem Sendediversitybetrieb. Auch bei der Basisstation 1 ist es möglich, Sende- und Empfangsantennen in der bezüglich der Mobilstation 5 beschriebenen Weise zu einer oder - bei Sendediversitybetrieb - mehreren Sende- /Empfangsantennen mittels Antennenweiche zu kombinieren.

Um den mindestens einen Übertragungskanal von der Basisstation 1 zur Mobilstation 5 einzurichten ist zuvor ein Austausch von Signalisierungsinformationen zwischen der Basisstation 1 und der Mobilstation 5 erforderlich, um die entsprechende Zuteilung der zur Bildung des Übertragungskanals notwendigen physikalischen Ressourcen zu veranlassen. Es soll nun vorgesehen sein, daß die über den einzurichtenden Übertragungskanal von der Basisstation 1 zur Mobilstation 5 zu sendenden Daten in der Basisstation 1 aufbereitet werden, um die Qualität des Empfangs dieser Daten bei der Mobilstation 5 zu erhöhen. Die Detektion der so empfangenen Daten erfordert dann in der Mobilstation 5 nur geringen oder gar keinen Aufwand mehr, so daß der Leistungsverbrauch in der Mobilstation 5 reduziert und die Stand-By-Zeit der Mobilstation 5 erhöht wird. Die Mobilstation 5 ist dabei in der Lage, zwischen zwei verschiedenen Detektionsmitteln 30, 35 umzuschalten, je nach dem, mit welcher Qualität die Daten von der Basisstation 1 empfangen werden. Dazu ist jedoch in der Mobilstation 5 eine Kenntnis darüber erforderlich, ob die zu sendenden Daten in der Basisstation 1 überhaupt aufbereitet wurden. Daher wird vor der Einrichtung des Übertragungskanals von der Basisstation 1 mit den Signalisierungsinformationen eine dritte Nachricht von der Basisstation 1 zur Mobilstation 5 übertragen, die eine Information darüber enthält, ob in der Sendestation 1 eine Aufbereitung der zu sendenden Daten durchgeführt wird. Die dritte Nachricht wird dabei von den zweiten Nachrichtenerzeugungsmitteln 45 erzeugt und über die dritten Auswahlmittel 80 und die erste Antenneneinheit 10 an die erste Empfangseinheit 85 abgestrahlt. Die ersten Auswertemittel 20 prüfen dann anhand der dritten Nachricht, ob eine Aufbereitung der zu sendenden Daten in der Basisstation 1 durchgeführt wird. Ist dies der Fall, so werden zur Detektion die ersten Detektionsmittel 30 ausgewählt, andernfalls werden die zweiten Detektionsmittel 35 zur Detektion ausgewählt. Optional kann es vorgesehen sein, daß die zu sendenden Daten in der Basisstation 1 in verschiedener Weise aufbereitet werden. Dann wird mit der dritten Nachricht auch eine Information darüber von der Basisstation 1 an die Empfangsstation 5 übertragen, nach welcher Art die zu sendenden Daten aufbereitet werden. Die Mobilstation 5 kann dazu, wie in Figur 1 gestrichelt dargestellt ist, dritte Detektionsmittel 36 umfassen, die über die ersten Auswahlmittel 25 ebenfalls mit der ersten Empfangseinheit 85 verbindbar sind. Die ersten Auswertemittel 20 prüfen dann anhand der dritten Nachricht zunächst, ob die zu sendenden Daten in der Basisstation 1 aufbereitet wurden. Ist dies nicht der Fall, so veranlassen die ersten Auswertemittel 20 die ersten Auswahlmittel 25 zur Verbindung der ersten Empfangseinheit 85 mit den zweiten Detektionsmitteln 35. Andernfalls prüfen die ersten Auswertemittel 20 anhand der dritten Nachricht, nach welcher Art die zu sendenden Daten in der Basisstation 1 aufbereitet werden. Je nach Art der Aufbereitung können dann die ersten Auswertemittel 20 die ersten Auswahlmittel 25 zur Verbindung der ersten Detektionsmittel 30 oder der dritten Detektionsmittel 36 mit der ersten Empfangseinheit 85 veranlassen. Die von der Basisstation 1 zu sendenden Daten werden dann von den mit der ersten Empfangseinheit 85 verbundenen Detektionsmitteln detektiert.

Es kann vorgesehen sein, daß die von der Basisstation 1 zur Mobilstation 5 zu sendenden Daten in einem einzigen gewidmeten Übertragungskanal übertragen werden. Es kann jedoch auch vorgesehen sein, daß für die Übertragung mehrere gewidmete Übertragungskanäle eingerichtet werden. Die dritte Nachricht wird dann von der Basisstation 1 für jeden einzurichtenden Übertragungskanal einzeln an die ersten Auswertemittel 20 über die erste Empfangseinheit 85 abgesetzt. Dies ist besonders dann unabdingbar, wenn die in den verschiedenen Übertragungskanälen zu sendenden Daten nach verschiedenen Arten in der Basisstation 1 aufbereitet werden oder wenn in einem Übertragungskanal Daten ohne Aufbereitung und in einem anderen Übertragungskanal Daten mit Aufbereitung gesendet werden sollen. Wenn jedoch in mehreren Übertragungskanälen Daten ohne Aufbereitung von der Basisstation 1 zur Mobilstation 5 übertragen werden sollen oder wenn in verschiedenen Übertragungskanälen Daten übertragen werden sollen, die nach der gleichen Art aufbereitet werden, so kann es auch vorgesehen sein, eine einzige dritte Nachricht bezüglich mehrerer Übertragungskanäle von der Basisstation 1 zur Mobilstation 5 zu übertragen, wenn die Art der Aufbereitung in diesen Übertragungskanälen gleich ist oder wenn keine Aufbereitung in diesen Übertragungskanälen stattfindet.

Die Aufbereitung der zu sendenden Daten in der Basisstation 1 kann auf verschiedene Arten erfolgen. Zum einen können die von der Basisstation 1 zu versendenden Daten von der ersten Antenneneinheit 10 mit einer Sendeantenne oder von der zweiten Antenneneinheit 15 mit mehreren Sendeantennen mittels eines Sendediversityverfahrens abgestrahlt werden. Die Verwendung der ersten Antenneneinheit 10 mit einer Sendeantenne stellt dabei den herkömmlichen Fall ohne Aufbereitung der zu versendenden Daten dar. Bei Verwendung der zweiten Antenneneinheit 15 mit mehreren Sendeantennen wird in der Mobilstation 5 ein Mehrwegeempfang erzeugt, durch den Signaleinbrüche oder Fading auf einem oder mehreren der Empfangswege durch einen Empfangsweg ohne Fading kompensiert werden kann. Mit der dritten Nachricht kann somit eine Information darüber übertragen werden, ob die von der Basisstation 1 zu versendenden Daten von der ersten Antenneneinheit 10 oder von der zweiten Antenneneinheit 15 abgestrahlt werden. Werden die zu versendenden Daten dabei von der ersten Antenneneinheit 10 abgestrahlt, so veranlassen die ersten Auswertemittel 20 die Anschaltung der zweiten Detektionsmittel 35 über die ersten Auswahlmittel 25 an die erste Empfangseinheit 85. Andernfalls werden die dritten Detektionsmittel 36 an die erste Empfangseinheit 85 über die ersten Auswahlmittel 25 angeschaltet. Die zweiten Detektionsmittel 35 führen dabei eine Entzerrung und Detektion der empfangenen Daten in herkömmlicher Weise, beispielsweise nach einem Joint Detection Verfahren (JD), durch. Ein solches Verfahren ist aus der Veröffentlichung "System Description Performance Evaluation", Concept Group Delta WB-TDMA/CDMA, ETSI, SMG2 bekannt. Dabei handelt es sich um eine kombinierte Rückgängigmachung von sogenannter Mehrfachnutzerinterferenz und Intersymbolinterferenz. Mehrfachnutzerinterferenz entsteht dabei durch gegenseitige Beeinflussung von Codes, die unterschiedlichen Mobilstationen zugeordnet sind, bei der Übertragung über gemultiplexte Übertragungskanäle. Intersymbolinterferenz entsteht durch Mehrwegeausbreitung der Signale im Funkkanal.

Die dritten Detektionsmittel 36 können ebenfalls nach einem JD-Verfahren arbeiten, angepaßt an die verwendete zweite Antenneneinheit 15 bezüglich der für die Entzerrung erforderlichen Schätzung der Impulsantwort der dabei verwendeten Übertragungskanäle.

Die Aufbereitung der von der Basisstation 1 zu sendenden Daten kann auch dadurch erfolgen, daß in der Aufbereitungseinheit 55 eine Vorverzerrung der zu sendenden Daten erfolgt. Die Vorverzerrung wird dann durch die Eigenschaften des einzurichtenden Übertragungskanals im Vergleich zu den zweiten Detektionsmitteln 35 kompensiert, so daß die von der Basisstation 1 zu sendenden Daten an der ersten Empfangseinheit 85 unverzerrt ankommen und somit in der Mobilstation 5 nicht mehr entzerrt werden müssen. Die empfangenen Daten können dann durch die ersten Detektionsmittel 30 beispielsweise lediglich durch Korrelationsempfang detektiert werden, wozu die ersten Detektionsmittel 30 an die erste Empfangseinheit 85 über die ersten Auswahlmittel 25 anzuschalten sind.

Die ersten Detektionsmittel 30 können also lediglich als Korrelationsempfänger ausgebildet sein, beispielsweise nach einem sogenannten "Matched Filter"-Konzept, wie es aus der Veröffentlichung "Signalübertragung", Lüke, Springer-Verlag, 5.Auflage, 1991 bekannt ist, da sie entsprechend aufbereitete Daten von der Basisstation 1 detektieren, die unverzerrt und daher mit hoher Empfangsqualtität an der Mobilstation 5 eintreffen.

Werden hingegen die Daten von der Basisstation 1 ohne Vorverzerrung und über die erste Antenneneinheit 10 zur Mobilstation 5 versendet, so erreichen sie die erste Empfangseinheit 85 verzerrt und müssen den zweiten Detektionsmitteln 35 zur Entzerrung mit erhöhtem Aufwand zugeführt werden. Dies ist erheblich aufwendiger und leistungsverbrauchender als beispielsweise ein reiner Korrelationsempfang mit den ersten Detektionsmitteln 30. Entweder entfällt in diesem Fall die dritte Nachricht oder die dritte Nachricht enthält in diesem Fall eine Information darüber, daß keine Aufbereitung in der Basisstation stattfindet.

Eine noch höhere Empfangsqualität läßt sich erzielen, wenn die Vorverzerrung mit der Abstrahlung über die zweite Antenneneinheit 15 verknüpft wird, so daß die zu sendenden Signale nicht nur unverzerrt, sondern auch ohne Signaleinbrüche oder Fading an der ersten Empfangseinheit 85 ankommen. Auch in diesem Fall können lediglich die ersten Detektionsmittel 30 beispielsweise mit einem reinen Korrelationsempfang an die erste Empfangseinheit 85 über die ersten Auswahlmittel 25 angeschlossen werden. Mit der dritten Nachricht wird dann eine Information darüber übertragen, daß die von der Basisstation 1 zu versendenden Daten von der zweiten Antenneneinheit 15 abgestrahlt werden und daß in der Basisstation 1 eine Vorverzerrung der zu sendenden Daten durchgeführt wird.

Die Steuerung der ersten Auswahlmittel 25 zur Verbindung der entsprechenden Detektionsmittel mit der ersten Empfangseinheit 85 erfolgt durch die ersten Auswertemittel 20 nach Auswertung der entsprechenden dritten Nachricht.

Bei dem hier beschriebenen CDMA-System im TDD-Betrieb empfiehlt sich für die Durchführung einer Vorverzerrung das aus der genannten Veröffentlichung "Summary of Joint Predistortion" bekannte Joint Predistortion Verfahren (JP). Entsprechend wird mit der dritten Nachricht eine Information darüber von der Basisstation 1 an die Mobilstation 5 übertragen, ob eine Vorverzerrung nach dem JP-Verfahren für die zu sendenden Daten durchgeführt wird. Bei dem JP-Verfahren schätzt die Basisstation 1 mittels den für die Übertragung von der Mobilstation 5 zur Basisstation 1 verwendeten Zeitschlitzen die Impulsantwort des Übertragungskanals von der Mobilstation 5 zur Basisstation 1. Diese Schätzung kann auch für den einzurichtenden Übertragungskanal von der Basisstation 1 zur Mobilstation 5 verwendet werden, da im TDD-Betrieb die Übertragungseigenschaften der beiden Übertragungskanäle in Hin- und Rückrichtung im wesentlichen gleich sind und keine Frequenzunterschiede auftreten. Die zu sendenden Daten werden dann vor ihrer Übertragung an die Mobilstation 5 mit der inversen geschätzten Impulsantwort gefaltet und somit vorverzerrt.

Es kann weiterhin vorgesehen sein, daß mit den Signalisierungsinformationen vor der dritten Nachricht eine zweite Nachricht von der Mobilstation 5 zur Basisstation 1 übertragen wird, die eine Information darüber enthält, welche Art oder welche Arten von Aufbereitung der von der Basisstation 1 zu sendenden Daten von der Mobilstation 5 zur Detektion dieser Daten unterstützt wird bzw. unterstützt werden. Die zweite Nachricht wird dabei von den ersten Nachrichtenerzeugungsmitteln 40 erzeugt und von der Sendeantenne 70 der Mobilstation 5 an die Basisstation 1 abgestrahlt. Dort wird sie von der zweiten Empfangseinheit 90 über die zweite Empfangsantenne 65 empfangen und den zweiten Auswertemitteln 50 übermittelt. Die von der Mobilstation 5 unterstützten Arten der Aufbereitung hängen von den in der Mobilstation 5 über die ersten Auswahlmittel 25 an die erste Empfangseinheit 85 anschaltbaren Detektionsmitteln 30, 35, 36 ab. So kann im vorliegenden Beispiel die zweite Nachricht die Information enthalten, daß in der Mobilstation 5 eine Detektion durch reinen Korrelationsempfang und eine Detektion mit vorheriger Entzerrung nach einem Joint Detection Verfahren in zwei verschiedenen Stufen hinsichtlich des Aufwandes für Fehlererkennung und/oder -korrektur möglich ist. Die zweiten Auswertemittel 50 werten die zweite Nachricht dann dahingehend aus, welche Art oder welche Arten der Aufbereitung von zu sendenden Signalen die Mobilstation 5 unterstützt. Die zweiten Auswertemittel 50 prüfen dann, ob diese Art oder diese Arten der Aufbereitung auch von der Basisstation 1 unterstützt wird bzw. unterstützt werden. Im vorliegenden Beispiel stellen die zweiten Auswertemittel 50 fest, daß die von der Mobilstation 5 angebotene Detektion durch reinen Korrelationsempfang beispielsweise mit der Aufbereitung durch Vorverzerrung oder durch Vorverzerrung und Sendediversitybetrieb zusammenpaßt. Weiterhin stellen die zweiten Auswertemittel 50 anhand der zweiten Nachricht fest, daß die zu sendenden Daten auch nicht oder durch Sendediversitybetrieb teilweise aufbereitet an die Mobilstation 5 gesendet werden können, da mit dem Joint Detection-Verfahren die auf dem einzurichtenden Übertragungskanal verzerrten und durch Fading mehr oder weniger beeinflußten Signale entsprechend entzerrt und detektiert werden können. Die zweiten Auswertemittel 50 stellen in diesem Beispiel also fest, daß die von der Mobilstation 5 unterstützten Arten der Aufbereitung auch von der Basisstation 1 unterstützt werden. Die zweiten Auswertemittel 50 wählen dann mindestens eine Art der Aufbereitung aus, die sowohl von der Basisstation 1 als auch von der Mobilstation 5 unterstützt wird und steuert die zweiten Nachrichtenerzeugungsmittel 45 derart an, die mindestens eine ausgewählte Art der Aufbereitung in der dritten Nachricht anzugeben. Weiterhin steuern die zweiten Auswertemittel 50 die Aufbereitungseinheit 55 und die zweiten Auswahlmittel 75 so an, daß sie die zu sendenden Daten gemäß der mindestens einen ausgewählten Art aufbereitet. Wenn also beispielsweise die zweiten Auswertemittel 50 anhand der zweiten Nachricht feststellen, daß die Mobilstation 5 eine Detektion mit reinem Korrelationsempfang unterstützt, so veranlaßt sie die Aufbereitungseinheit 55 zur Vorverzerrung der zu sendenden Signale und die zweiten Auswahlmittel 75 zur Verbindung der zweiten Antenneneinheit 15 oder der ersten Antenneneinheit 10 mit der Aufbereitungseinheit 55. Weiterhin veranlassen dann die zweiten Auswertemittel 50 die zweiten Nachrichtenerzeugungsmittel 45 zur Erzeugung einer dritten Nachricht mit Informationen darüber, daß die zu sendenden Daten vorverzerrt sind und über eine oder mehrere Antennen abgestrahlt werden. Wird für die Vorverzerrung das JP-Verfahren verwendet, so kann dies ebenfalls in der dritten Nachricht angegeben werden.

Diese Wahl der Aufbereitung der zu sendenden Daten führt in der Mobilstation 5 zu einem minimalen Aufwand für die Detektion der dort empfangenen Daten und zu einem minimalen Leistungsverbrauch.

Es kann weiterhin vorgesehen sein, daß mit den Signalisierungsinformationen vor der dritten Nachricht eine erste Nachricht von der Basisstation 1 zur Mobilstation 5 übertragen wird, die eine Information darüber enthält, welche Art oder welche Arten von Aufbereitung der zu sendenden Daten von der Basisstation 1 unterstützt wird bzw. unterstützt werden. Dazu erzeugen die zweiten Nachrichtenerzeugungsmittel 45 vor Absetzen der dritten Nachricht die erste Nachricht und setzen sie an die Mobilstation 5 ab. Im beschriebenen Beispiel enthält die erste Nachricht Informationen darüber, daß die zu sendenden Daten ohne Vorverzerrung und mit nur einer Sendeantenne an die Mobilstation 5 abgestrahlt werden können. Weiterhin umfaßt die erste Nachricht Informationen darüber, daß zu sendende Daten von der Basisstation 1 mit Vorverzerrung und nur von einer einzigen Sendeantenne abgestrahlt werden können. Weiterhin umfaßt die erste Nachricht Informationen darüber, daß die zu sendenden Daten von der Basisstation 1 mit Vorverzerrung und mit mehreren Antennen abstrahlbar sind. Weiterhin umfaßt die erste Nachricht Informationen darüber, daß die zu sendenden Daten ohne Vorverzerrung aber von mehreren Antennen abstrahlbar sind. Somit sind vier verschiedene Arten der Aufbereitung in der Basisstation 1 möglich und als Informationen in der ersten Nachricht enthalten. Dabei wird die Nichtaufbereitung von Daten ohne Vorverzerrung und bei Verwendung nur einer Sendeantenne auch als Aufbereitungsart mitgezählt. Die so erzeugte erste Nachricht wird in der ersten Empfangseinheit 85 der Mobilstation 5 empfangen und zur Auswertung an die ersten Auswertemittel 20 weitergeleitet. Die ersten Auswertemittel 20 werten dann die erste Nachricht dahingehend aus, welche Art oder welche Arten der Aufbereitung von zu sendenden Signalen die Basisstation 1 unterstützt. Die ersten Auswertemittel 20 prüfen dann, ob diese Art oder diese Arten der Aufbereitung auch von der Mobilstation 5 unterstützt wird bzw. unterstützt werden. Im vorliegenden Beispiel stellen die ersten Auswertemittel 20 fest, daß die Aufbereitung durch Vorverzerrung mit oder ohne Sendediversitybetrieb von der Mobilstation 5 durch die ersten Detektionsmittel 30 mit reinem Korrelationsempfang unterstützt wird. Weiterhin stellen die ersten Auswertemittel 20 fest, daß die Nichtaufbereitung ohne Vorverzerrung und mit nur einer Sendeantenne durch die zweiten Detektionsmittel 35 mittels des Joint-Detection-Verfahrens unterstützt werden. Weiterhin stellen die ersten Auswertemittel 20 fest, daß die Aufbereitung ohne Vorverzerrung und mit Sendediversitybetrieb durch die dritten Detektionsmittel 36 mittels des Joint Detection Verfahrens unterstützt wird.

Die ersten Auswertemittel 20 steuern dann die ersten Nachrichtenerzeugungsmittel 40 derart an, daß mindestens eine Art der Aufbereitung in der zweiten Nachricht angegeben wird, die sowohl von der Basisstation 1 als auch von der Mobilstation 5 unterstützt wird. Die ersten Auswertemittel 20 können dabei in diesem Beispiel die ersten Nachrichtenerzeugungsmittel 40 derart ansteuern, daß in die zweite Nachricht Informationen darüber aufgenommen werden, daß eine Detektion mit reinem Korrelationsempfang möglich ist. Es können natürlich in der zweiten Nachricht auch Angaben darüber aufgenommen werden, daß eine Detektion mit vorheriger Entzerrung nach dem Joint-Detection-Verfahren möglich ist. Werden jedoch die letztgenannten Informationen über die mögliche Entzerrung nach dem Joint Detection Verfahren nicht in die zweite Nachricht aufgenommen, so wird sichergestellt, daß die Basisstation 1 eine Aufbereitung der zu sendenden Daten vorsieht, die eine Detektion mit reinem Korrelationsempfang in der Mobilstation 5 ermöglichen und somit den Leistungsverbrauch in der Mobilstation 5 minimieren.

Es kann optional weiterhin vorgesehen sein, daß als zu sendende Daten die Signalisierungsinformationen selbst von der Basisstation 1 zur Mobilstation 5 aufbereitet übertragen werden. Dies kann jedoch frühestens dann geschehen, wenn anhand der zweiten Nachricht die von der Mobilstation 5 unterstützte Art bzw. die von der Mobilstation 5 unterstützten Arten der Aufbereitung bei der Basisstation 1 bekannt sind, wobei die Aufbereitung in mindestens einer von der Mobilstation 5 unterstützten Art erfolgt. Vor Übertragung von aufbereiteten Signalisierungsinformationen zur Mobilstation 5 setzt die Basisstation 1 außerdem eine entsprechende dritte Nachricht an die Mobilstation 5 ab, um die Mobilstation 5 über die verwendete Art der Aufbereitung rechtzeitig zu informieren, damit die Mobilstation 5 vor Übertragen der aufbereiteten Signalisierungsinformationen die ersten Auswahlmittel 25 entsprechend einstellen kann, um die erforderlichen Detektionsmittel mit der ersten Empfangseinheit 85 zu verbinden. Auf diese Weise kann auch bereits bei der Übertragung von Signalisierungsinformationen zur Mobilstation 5 Leistungsverbrauch an der Mobilstation 5 eingespart werden, vor allem dann, wenn die Signalisierungsinformationen so aufbereitet werden, daß die ersten Detektionsmittel 30 mit dem reinen Korrelationsempfang zur Detektion der empfangenen Signalisierungsinformationen verwendet werden können. Im beschriebenen Beispiel könnten die Signalisierungsinformationen in der Basisstation 1 beispielsweise derart aufbereitet werden, daß sie vorverzerrt und über eine oder mehrere Sendeantennen abgestrahlt werden. Die Detektion in der Mobilstation 5 erfolgt dann durch Anschaltung der ersten Detektionsmittel 30 über die ersten Auswahlmittel 25 an die erste Empfangseinheit 85, so daß ein reiner Korrelationsempfang möglich ist.

Von dem Zeitpunkt an, von dem die Signalisierungsinformationen aufbereitet von der Basisstation 1 zur Mobilstation 5 übertragen werden, veranlassen die zweiten Auswertemittel 50 die dritten Auswahlmittel 80 dazu, die Verbindung der zweiten Nachrichtenerzeugungsmittel 45 mit der ersten Antenneneinheit 10 zu unterbrechen und die zweiten Nachrichtenerzeugungsmittel 45 mit der Aufbereitungseinheit 55 zu verbinden. Die Aufbereitung erfolgt dann wie bereits allgemein für die zu sendenden Daten beschrieben. Alle anschließend für die Signalisierungsinformationen von den zweiten Nachrichtenerzeugungsmitteln 45 erzeugten Nachrichten werden dann entsprechend der gewählten Aufbereitungsart oder der gewählten Aufbereitungsarten aufbereitet an die Mobilstation 5 gesendet.

Für den Fall, daß die zu sendenden Daten in der Aufbereitungseinheit 55 nicht vorverzerrt werden, sondern lediglich durch Abstrahlung über mehrere Antennen aufbereitet werden, kann es auch vorgesehen sein, die zu sendenden Daten lediglich transparent durch die Aufbereitungseinheit 55 durchzuleiten.

Die aufbereiteten zu sendenden Daten können in einem Übertragungskanal übertragen werden, der nur der Verbindung zwischen der Basisstation 1 und der Mobilstation 5 gewidmet ist. Dies ist im Fall einer in der Aufbereitungseinheit 55 durchgeführten Vorverzerrung nach dem Joint Predistortion Verfahren sogar unerläßlich, da diese Vorverzerrung nur für den gewidmeten Hin- bzw. Rückkanal zwischen der Basisstation 1 und der Mobilstation 5 charakteristisch ist, nicht jedoch für Kanäle, die von mehreren Mobilstationen gemeinsam genutzt werden. Auch entsprechend aufbereitete Signalisierungsinformationen können in dem Übertragungskanal übertragen werden, der nur der Verbindung zwischen der Basisstation 1 und der Mobilstation 5 gewidmet ist. Dies geht jedoch frühestens nach Aussenden der dritten Nachricht von der Basisstation 1 zur Mobilstation 5, da erst anschließend dieser Übertragungskanal eingerichtet wird. Zuvor werden die Signalisierungsinformationen in einem mehreren Mobilstationen zugänglichen Kanal übertragen. Dies gilt dann auch für die Übertragung der ersten Nachricht, die vor der dritten Nachricht übertragen wird.

Die erste Nachricht, die zweite Nachricht und die dritte Nachricht werden jeweils in Form eines Nachrichtenelementes als Teil der Signalisierungsinformationen übertragen. Ein solches Nachrichtenelement läßt sich besonders einfach in die bestehenden Protokolle zum Austausch der Signalisierungsinformationen einfügen.

Die von der Basisstation 1 zur Mobilstation 5 zu sendenden Signalisierungsinformationen werden durch die zweiten Nachrichtenerzeugungsmittel 45 erzeugt und von der ersten Antenneneinheit 10 über einen von mehreren Mobilstationen gemeinsam genutzten Kanal an die Mobilstation 5 abgestrahlt, solange der einzurichtende gewidmete Übertragungskanal zwischen der Basisstation 1 und der Mobilstation 5 noch nicht besteht. Besteht dieser Übertragungskanal, so werden die weiteren Signalisierungsinformationen von dem zweiten Nachrichtenerzeugungsmittel 45 über die Aufbereitungseinheit 55 und entweder die erste Antenneneinheit 10 oder die zweite Antenneneinheit 15 an die Mobilstation 5 versendet. Zur Erzeugung der für die Signalisierungsinformationen erforderlichen Nachrichten werden die zweiten Nachrichtenerzeugungsmittel 45 von den zweiten Auswertemitteln 50 angesteuert, die eine Funkressourcensteuerung RRC (Radio Ressource Control) umfaßt. Über die RRC entscheidet der Betreiber des Mobilfunknetzes über die Zuweisung der entsprechenden physikalischen Ressourcen zur Einrichtung des gewidmeten Übertragungskanals von der Basisstation 1 zur Mobilstation 5. In der RRC werden somit die physikalischen Ressourcen des einzurichtenden Übertragungskanals verwaltet. Ob und wann die Basisstation 1 nun beispielsweise eine Joint Predistortion Vorverzerrung in einem Zeitschlitzübertragungskanal betreibt, entscheidet somit der Betreiber des Mobilfunknetzes über die RRC. Welche physikalischen Ressourcen auf welche Weise von der RRC an welche Mobilstation zugewiesen werden, wird von der RRC mittels der in den zweiten Nachrichtenerzeugungsmitteln 45 zu bildenden Signalisierungsinformationen an die betroffenen Mobilstationen übermittelt. Die für diese Signalisierungsinformationen zu bildenden Nachrichten und die zugehörigen Nachrichtenelemente sind aus der genannten Druckschrift "RRC Protocol Specification" bekannt.

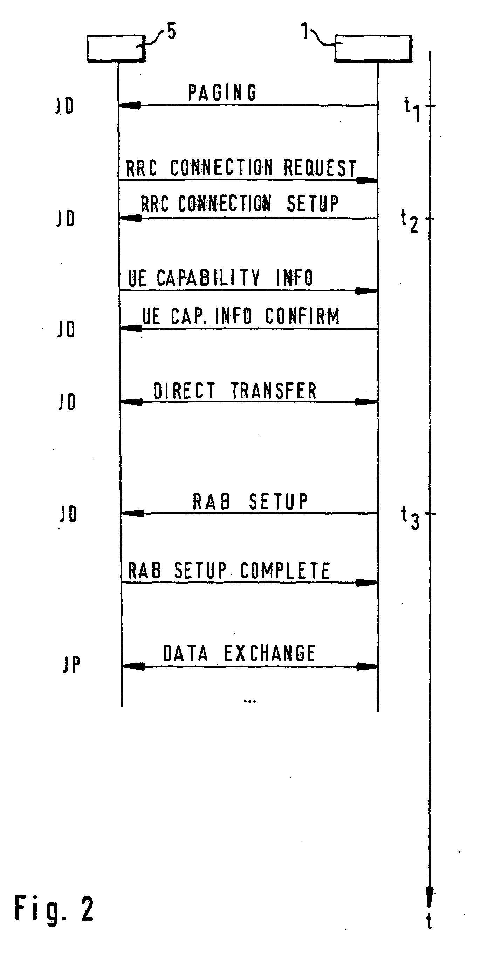

In Figur 2 ist ein mögliches Signalisierungsszenario über einer Zeitachse aufgetragen, die die zwischen der Basisstation 1 und der Mobilstation 5 auszutauschenden Signalisierungsinformationen in Abhängigkeit der Zeit darstellt.

Die Erzeugung von von der Mobilstation 5 zur Basisstation 1 zu sendenden Signalisierungsinformationen kann dabei durch die ersten Nachrichtenerzeugungsmittel 40 gesteuert durch die ersten Auswertemittel 20 erfolgen. Die Auswertung der Signalisierungsinformationen der Mobilstation 5 erfolgt durch die zweiten Auswertemittel 50 in der Basisstation 1 und die Auswertung der Signalisierungsinformationen von der Basisstation 1 erfolgt durch die ersten Auswertemittel 20 in der Mobilstation 5.

Das Signalisierungsszenario gemäß Figur 2 ist für einen ankommenden Telefonanruf an der Mobilstation 5 in einem sogenannten "Idle Mode" beschrieben, in dem weder eine Datenübertragung zwischen der Mobilstation 5 und der Basisstation 1 existiert, noch der genaue Aufenthaltsort der Mobilstation 5 dem Mobilfunknetz bekannt ist. In diesem "Idle Mode" kann die Mobilstation 5 nur grob im Mobilfunknetz lokalisiert werden. Dabei sind mehrere jeweils von einer Basisstation aufgespannte Funkzellen zu jeweils einem Lokalisierungsbereich zusammengefaßt, wobei der Aufenthalt der Mobilstation 5 in einem solchen Lokalisierungsbereich bekannt ist. Verläßt die Mobilstation 5 einen Lokalisierungsbereich, um in einen anderen Lokalisierungsbereich einzutreten, so teilt sie dies dem Netzbetreiber mit. Wenn nun die Mobilstation 5, die beispielsweise als Mobiltelefon ausgebildet sein kann, angerufen wird und sich im "Idle Mode" befindet, so sendet die Basisstation 1 zunächst eine "Paging"-Nachricht zur Mobilstation 5 über einen Pagingkanal PCH, da die Mobilstation 5 aufgrund ihrer nur groben Lokalisierung im "Idle Mode" am einfachsten auf diese Weise erreichbar ist. Eine Verbindung von der Basisstation 1 zur Mobilstation 5 wird im folgenden als Downlink und eine Verbindung von der Mobilstation 5 zur Basisstation 1 als Uplink bezeichnet. Der Pagingkanal stellt somit eine Downlink-Verbindung dar. Über diesen Pagingkanal wird der Mobilstation 5 der eingehende Ruf signalisiert. Die "Paging"-Nachricht geht zu einem ersten Zeitpunkt t₁ an der Mobilstation 5 ein. Im "Idle Mode" geht die Mobilstation 5 davon aus, daß die ihr zugesandten Signalisierungsinformationen nicht aufbereitet sind, so daß die ersten Auswertemittel 20 die ersten Auswahlmittel 25 so ansteuern, daß die zweiten Detektionsmittel 35 mit der ersten Empfangseinheit 85 verbunden sind und eine Joint-Detection-Entzerrung und Detektion in der Mobilstation 5 stattfindet. Dies ist in Figur 2 auf der Seite der Mobilstation 5 durch die Buchstabenkombination JD zum ersten Zeitpunkt t₁ verdeutlicht. Auf die "Paging"-Nachricht reagiert die Mobilstation 5, indem sie über einen physikalischen RACH-Kanal (Random Access Channel), der einen allen Mobilstationen zugänglichen Uplinkkanal darstellt, eine sogenannte "RRC Connection Request"-Nachricht zur Basisstation 1 sendet. Mit dieser Meldung fordert die Mobilstation 5 den Netzbetreiber über die Basisstation 1 zum Einrichten einer Telekommunikationsverbindung zum rufenden Teilnehmer auf. Die RRC der Basisstation 1 und damit der Netzbetreiber des Mobilfunknetzes nimmt diese "RRC Connection Request"-Nachricht entgegen und veranlaßt die zweiten Nachrichtenerzeugungsmittel 45 dazu, der Mobilstation 5 auf diese "RRC Connection Request"-Nachricht mit einer "RRC Connection Setup"-Nachricht zu antworten. Über die "RRC Connection Request"-Nachricht hat sich die Mobilstation 5 im Mobilfunknetz bekannt gemacht und kann auf diese Weise in einer Funkzelle des Mobilfunknetzes lokalisiert werden. Im hier beschriebenen Beispiel soll dies die Funkzelle der Basisstation 1 sein. Mehrere der in der Funkzelle der Basisstation 1 befindliche Mobilstationen werden über einen gemeinsamen FACH (Forward Access Channel) mit Signalisierungsinformationen versorgt. Der FACH ist ein gemeinsamer Downlinkkanal für mehrere Mobilstationen in der Funkzelle der Basisstation 1. Die "RRC Connection Setup"-Nachricht wird von der Basisstation 1 über den FACH an die Mobilstation 5 übertragen. Über die "RRC Connection Setup"-Nachricht erhält die Mobilstation 5 Informationen über das Mobilfunknetz. Die "RRC Connection Setup"-Nachricht wird in der Mobilstation 5 zu einem zweiten Zeitpunkt t₂ empfangen und ebenfalls noch durch die zweiten Detektionsmittel 35 nach dem Joint-Detection-Verfahren entzerrt und detektiert. Der Zeitraum zwischen dem ersten Zeitpunkt t₁ und dem zweiten Zeitpunkt t₂ dient zum Aufbau einer Signalisierungsverbindung zwischen der Basisstation 1 und der Mobilstation 5, die im Downlink durch den FACH und im Uplink durch den RACH gebildet wird. Dabei ist der RACH ein Kanal, der allen Mobilstationen in der Funkzelle der Basisstation 1 zugänglich ist. Die Signalisierungsverbindung ist somit vom zweiten Zeitpunkt t₂ an vollständig installiert und wird nun für die weitere Signalisierung verwendet.

Da wie beschrieben eine Joint Predistortion Vorverzerrung nur für Übertragungskanäle geeignet ist, die speziell für die Übertragung von Informationen zwischen der Basisstation 1 und der Mobilstation 5 eingerichtet sind, nicht jedoch für Kanäle, die allen Mobilstationen in der Funkzelle der Basisstation 1 zugänglich sind, läßt sich das Joint Predistortion Verfahren nicht für den Austausch von Signalisierungsinformationen über den FACH verwenden. Daher ist bei Verwendung des FACH für die Übertragung von Signalisierungsinformationen von der Basisstation 1 zur Mobilstation 5 noch eine herkömmliche Entzerrungs- und Detektionsmethode, beispielsweise gemäß dem Joint Detection Verfahren, in der Mobilstation 5 erforderlich. Gemäß dem hier beschriebenen Beispiel wird vorausgesetzt, daß die Mobilstation 5 den Empfang von nach dem Joint Predistortion Verfahren vorverzerrten Signalen unterstützt, indem sie die ersten Detektionsmittel 30 mit der ersten Empfangseinheit 85 verbindet und somit ein reiner Korrelationsempfang zur Verfügung stellt. Das bedeutet, daß die Mobilstation 5 JP vorverzerrte Signale empfangen kann. Um dem Mobilfunknetz diese Fähigkeit mitzuteilen, sendet die Mobilstation 5 nach erhaltener "RRC Connection Setup"-Nachricht eine "UE Capability Info"-Nachricht an die Basisstation 1. UE steht dabei für "User Equipment" und damit für die Mobilstation 5. Der Aufbau der "UE Capability Information"-Nachricht ist aus der genannten Veröffentlichung "RRC Protocol Specification" bekannt. Die versendete "UE Capability Info"-Nachricht beinhaltet unter anderem ein Nachrichtenelement mit dem Namen "UE Mode Capability". In diesem Nachrichtenelement werden unter anderem Informationen darüber mitgeteilt, ob die Mobilstation 5 TDD und/oder FDD (Frequency Division Duplex) unterstützt. Das Nachrichtenelement "UE Mode Capability" ist dabei ebenfalls aus der genannten Veröffentlichung "RRC Protocol Specification" bekannt. Es ist in Tabelle 1 nachfolgend dargestellt.

**Tabelle 1**

| Parameter | Referenz | Typ | Bemerkung |
|---|---|---|---|
| Systemfähigkeit (UMTS/GSM/andere) | | | |
| UMTS-Fähigkeit (TDD/FDD) | | | |
| Chipratenfähigkeit | | | |
| Funkfrequenz-Fähigkeit | | | |
| Variable Duplex-Distanzfähigkeit | | | |

Gemäß der vorliegenden Erfindung soll in dieses Nachrichtenelement "UE Mode Capability" eine zusätzliche Information eingefügt werden, welche der Basisstation 1 signalisiert, ob die Mobilstation 5, die die "UE Capability Info"-Nachricht an die Basisstation 1 versendet, eine Joint Predistortion Vorverzerrung unterstützt. Gemäß Tabelle 2 wird das auf diese Weise ergänzte neue Nachrichtenelement "UE Mode Capability" gemäß der Erfindung dargestellt.

**Tabelle 2**

| Parameter | Referenz | Typ | Bemerkung |
|---|---|---|---|
| Systemfähigkeit (UMTS/GSM/andere) | | | |
| UMTS-Fähigkeit (TDD/FDD) | | | |
| TDD-Modus (JD/JP) | | | Nur TDD-Modus |
| Chipratenfähigkeit | | | |
| Funkfrequenz-Fähigkeit | | | |
| Variable Duplex-Distanzfähigkeit | | | |

Die ergänzende Parameterinformation "TDD-Modus (JD/JP)" beschreibt in diesem Beispiel, daß im TDD-Betrieb die Mobilstation 5 eine Detektion von nach dem JP-Verfahren vorverzerrten Signalen unterstützt. Die Bemerkung "nur TDD-Modus" bedeutet, daß die Unterstützung dieser Detektion nur bei TDD-Betrieb möglich ist. Das JP-Verfahren ist beispielsweise nicht im FDD-Betrieb anwendbar, da aus dem Rückkanal von der Mobilstation 5 zur Basisstation 1 nicht die Impulsantwort für den Hinkanal von der Basisstation 1 zur Mobilstation 5 geschätzt werden kann aufgrund der unterschiedlichen Frequenzlagen im Hin- und Rückkanal bei FDD-Betrieb.

Das Mobilfunknetz weiß nun anhand des neuen Nachrichtenelementes "UE Mode Capability" daß die Mobilstation 5 von der Basisstation 1 JP vorverzerrte Signale empfangen kann. Die RRC veranlaßt daraufhin die zweiten Nachrichtenerzeugungsmittel 45 dazu, der Mobilstation 5 eine Empfangsbestätigung der "UE Capability Info"-Nachricht in Form einer "UE Capability Info Confirm"-Nachricht zu senden. Auch diese wird von der Mobilstation 5 noch nach dem JD-Verfahren entzerrt und detektiert, da sie noch nicht in der Basisstation 1 vorverzerrt wurde und auf dem FACH an die Mobilstation 5 versendet wurde.

Über den FACH und den RACH werden im folgenden zwischen der Mobilstation 5 und der Basisstation 1 bzw. dem Mobilfunknetz die Parameter für die eigentliche Datenübertragung über den einzurichtenden gewidmeten Übertragungskanal bzw. über die einzurichtenden gewidmeten Übertragungskanäle für den eingehenden Ruf verhandelt. Dies ist in Figur 2 durch den Doppelpfeil "Direct Transfer" gekennzeichnet. Nach erfolgreicher Verhandlung und Festlegung der Parameter für die einzureichenden Übertragungskanäle über den "Direct Transfer" sendet die Basisstation 1 der Mobilstation 5 über den FACH Downlinkkanal eine "RAB Setup"-Nachricht (Radio Access Bearer). Der Aufbau einer solchen "RAB Setup"-Nachricht ist ebenfalls aus der genannten Veröffentlichung "RRC Protocol Specification" bekannt. Mit der "RAB Setup"-Nachricht teilt die Basisstation 1 der Mobilstation 5 die Konfiguration für den eigentlichen Nutzdatenverkehr mit. Die Konfiguration basiert dabei auf dem zuvor über den "Direct Transfer" ausgehandelten Parametern. Sowohl die über den "Direct Transfer" in der Mobilstation 5 empfangenen Signalisierungsinformationen als auch die "RAB Setup"-Nachricht werden von der Basisstation 1 zur Mobilstation 5 über den FACH übertragen und somit in der Mobilstation 5 noch nach dem JD-Verfahren entzerrt und detektiert. Die "RAB Setup"-Nachricht enthält unter anderem ein Nachrichtenelement mit dem Namen "Downlink Timeslot Info", welches der Mobilstation 5 den zu nutzenden Zeitschlitz für die Downlink Verbindung des einzurichtenden Übertragungskanals mitteilt. Bisher beinhaltet das Nachrichtenelement "Downlink Timeslot Info" als Information lediglich die Nummer des für den Downlink einzurichtenden Übertragungskanals von der Mobilstation 5 im Downlink zu nutzenden Zeitschlitzes, d.h. die Angabe, auf welchem Zeitschlitz die Mobilstation 5 Daten von der Basisstation 1 über den einzurichtenden Übertragungskanal im Downlink empfangen wird. Das Nachrichtenelement "Downlink Timeslot Info" ist dabei ebenfalls aus der genannten Veröffentlichung "RRC Protocol Specification" bekannt und in Tabelle 3 dargestellt.

**Tabelle 3**

| Parameter | Referenz | Typ | Bemerkung | |
|---|---|---|---|---|
| Zeitschlitznummer | | | Zu benutzender Zeitschlitz im Downlink (nur TDD) | Für jeden Zeitschlitz |

Zwischen der Basisstation 1 und der Mobilstation 5 können im Downlink mehrere gewidmete Übertragungskanäle in Form je eines der Mobilstation 5 zugewiesenen Zeitschlitzes eingerichtet werden. Die Bemerkung "für jeden Zeitschlitz" in dem Nachrichtenelement "Downlink Timeslot Info" bedeutet, daß für jeden zugewiesenen Zeitschlitz gleiche Bedingungen gelten.

Das Nachrichtenelement "Downlink Timeslot Info" ist ein optionales Nachrichtenelement der "RAB Setup"-Nachricht.

Gemäß der Erfindung signalisiert die Basisstation 1 im Nachrichtenelement "Downlink Timeslot Info" zusätzlich für jeden zugewiesenen Zeitschlitz die Information, ob die Daten in diesem Zeitschlitz an der Basisstation 1 gemäß dem JP-Verfahren für die Übertragung über den jeweils einzurichtenden Übertragungskanal vorverzerrt werden. Dabei können verschiedene zugewiesene Zeitschlitze unterschiedlich behandelt werden, d.h. Daten eines ersten zugewiesenen Zeitschlitzes können nach dem JP-Verfahren in der Basisstation 1 vorverzerrt werden und Daten eines zweiten zugewiesenen Zeitschlitzes werden in der Basisstation 1 nicht vorverzerrt. Das Nachrichtenelement "Downlink Timeslot Info" kann nun für jeden für den Downlink zugewiesenen Zeitschlitz des jeweils einzurichtenden Übertragungskanals angeben, ob die Daten in diesem Zeitschlitz an der Basisstation 1 nach dem JP-Verfahren vorverzerrt wurden oder nicht. Dabei kann es vorgesehen sein, daß im Nachrichtenelement "Downlink Timeslot Info" die Information, ob die Daten in einem für den Downlink zugewiesenen Zeitschlitz an der Basisstation 1 gemäß dem JP-Verfahren vorverzerrt wurden oder nicht, für mehrere zugewiesene Zeitschlitze zusammengefaßt wird, wenn die Daten in diesen Zeitschlitzen an der Basisstation 1 hinsichtlich der Aufbereitung gleich behandelt werden.

Tabelle 4 gibt ein Beispiel für ein gemäß der Erfindung realisiertes neues Nachrichtenelement "Downlink Timeslot Info" an.

**Tabelle 4**

| Parameter | Referenz | Typ | Bemerkung | |
|---|---|---|---|---|
| Zeitschlitznummer | | | Zu benutzender Zeitschlitz im Downlink (nur TDD) | Für jeden Zeitschlitz |
| JD/JP-Indikator | | | (nur TDD) | Für jeden Zeitschlitz |

Gemäß dem Beispiel nach Tabelle 4 teilt das Nachrichtenelement "Downlink Timeslot Info" gemäß der Erfindung der Mobilstation 5 mit, daß sämtliche Zeitschlitze, die für den jeweils einzurichtenden Übertragungskanal zwischen der Basisstation 1 und der Mobilstation 5 im Downlink der Mobilstation 5 zugewiesen werden, ausschließlich im TDD-Betrieb einer JP-Vorverzerrung bezüglich der in ihnen übertragenen Daten unterworfen werden.

Das in Figur 2 beschriebene Signalisierungsszenario ist für eine Aufbereitung der zu sendenden Daten an der Basisstation 1 mittels des JP-Verfahrens beispielhaft beschrieben. Es kann jedoch auch jede andere Art von Vorverzerrung oder Aufbereitung der zu sendenden Daten an der Basisstation 1 vorgesehen sein, durch die die Qualität des Empfangs dieser Daten an der Mobilstation 5 erhöht wird. Entsprechend muß dann die Art der Aufbereitung im neuen Nachrichtenelement "UE Mode Capability" bzw. im neuen Nachrichtenelement "Downlink Timeslot Info" angegeben werden.

Der Empfang der "RAB Setup"-Nachricht an der Mobilstation 5 erfolgt zu einem dritten Zeitpunkt t₃. Zwischen dem zweiten Zeitpunkt t₂ und dem dritten Zeitpunkt t₃ erfolgt der Signalisierungsaustausch zwischen der Basisstation 1 und der Mobilstation 5 über den FACH im Downlink und den RACH im Uplink, so daß die an der Mobilstation 5 empfangenen Signalisierungsinformationen noch mittels des JD-Verfahrens in diesem Beispiel entzerrt und detektiert werden. Nach Empfang der "RAB Setup"-Nachricht konfiguriert die Mobilstation 5 ihre physikalische Schicht und baut einen neuen physikalischen Uplink-Übertragungskanal von der Mobilstation 5 zur Basisstation 1 auf. Nach erfolgreicher Konfiguration sendet die Mobilstation 5 dann eine "RAB Configuration Complete"-Nachricht über den neu eingerichteten und gerade konfigurierten Uplink-Übertragungskanal an die Basisstation 1. Mittels der "R.AB Configuration Complete"-Nachricht signalisiert dabei die Mobilstation 5 der Basisstation 1, daß sie diesen Uplink-Übertragungskanal von der Mobilstation 5 zur Basisstation 1 eingerichtet hat, der speziell der Übertragung von Daten von der Mobilstation 5 zur Basisstation 1 gewidmet ist.

Nach dem Senden der "RAB Setup"-Nachricht richtet die Basisstation 1 entsprechend einen Downlink-Übertragungskanal von der Basisstation 1 zur Mobilstation 5 ein, der speziell der Übertragung von Daten von der Basisstation 1 zur Mobilstation 5 gewidmet ist. Über die beiden eingerichteten Übertragungskanäle zwischen der Basisstation 1 und der Mobilstation 5 ist ein Halbduplex-TDD-Betrieb möglich, bei dem einer oder mehrere Zeitschlitze jeweils einen gewidmeten Uplink-Übertragungskanal und einer oder mehrere davon verschiedene Zeitschlitze jeweils einen gewidmeten Downlink-Übertragungskanal bilden. Aus den mit den Zeitschlitzen im jeweiligen Uplink-Übertragungskanal übertragenen Daten kann die Basisstation 1 eine Impulsantwort des jeweiligen Uplink-Übertragungskanals schätzen, wobei diese geschätzte Impulsantwort auch eine Schätzung für die Impulsantwort des mindestens einen Downlink-Übertragungskanals darstellt. Die Schätzung kann somit zur JP-Vorverzerrung der über den mindestens einen Downlink-Übertragungskanal von der Basisstation 1 zur Mobilstation 5 zu sendenden Daten in der Basisstation 1 genutzt werden. Alle Signalisierungsinformationen und Daten bzw. Nutzdaten, die die Mobilstation 5 von nun an von der Basisstation 1 empfängt, werden auf dem mindestens einen neuen Downlink-Übertragungskanal an der Mobilstation 5 empfangen. Das sind sowohl die eigentlichen Daten bzw. Nutzdaten des eingehenden Rufes als auch zusätzlich benötigte Signalisierungsdaten. Der mit "Data Exchange" bezeichnete Doppelpfeil zwischen der Mobilstation 5 und der Basisstation 1 kennzeichnet diesen Datenaustausch über die der Verbindung zwischen der Basisstation 1 und der Mobilstation 5 eigens gewidmeten Uplink- und Downlink-Übertragungskanäle. Die von der Basisstation 1 an die Mobilstation 5 zu sendenden Daten werden dabei zumindest für einen des mindestens einen Downlink-Übertragungskanals in der Basisstation 1 gemäß dem JP-Verfahren vorverzerrt und an die Mobilstation 5 übertragen, wo sie durch reinen Korrelationsempfang mittels den ersten Detektionsmitteln 30 detektiert werden.

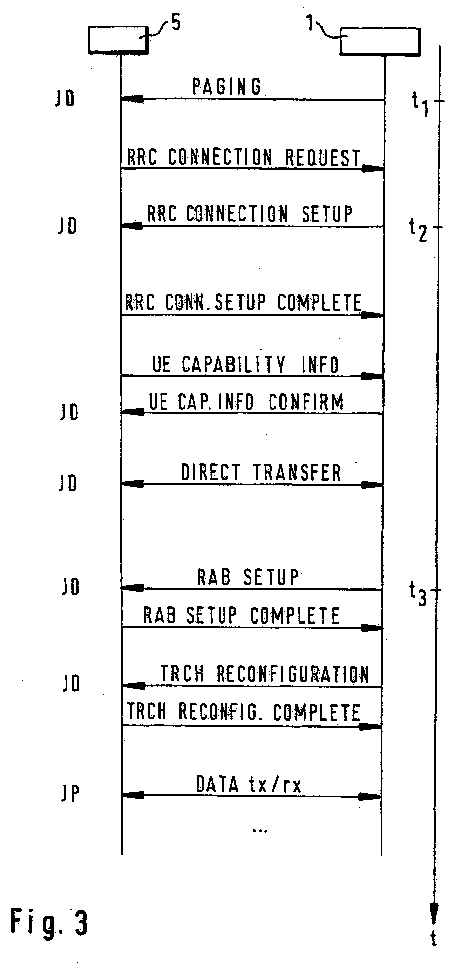

In einer zweiten Ausführungsform nach Figur 3 kann das beschriebene Signalisierungsszenario derart abgeändert werden, daß der Mobilstation 5 bereits zum zweiten Zeitpunkt t₂ mittels der "RRC Connection Setup"-Nachricht von der Basisstation 1 ein Uplink- und ein Downlink-Kanal zugewiesen wird, der fortan nur dem Austausch von Signalisierungsinformationen zwischen der Basisstation 1 und der Mobilstation 5 gewidmet ist. Die Mobilstation 5 quittiert die "RRC Connection Setup"-Nachricht mit einer an die Basisstation 1 gesendeten "RRC Connection Setup Complete"-Nachricht, die bereits über den neu eingerichteten Uplink-Kanal an die Basisstation 1 übertragen wird und dieser mitteilt, daß dieser Uplink-Kanal erfolgreich eingerichtet wurde. Dabei können sich die bereits zum zweiten Zeitpunkt t₂ der Mobilstation 5 zugewiesenen Uplink- und Downlink-Kanäle für die Übertragung der Signalisierungsinformationen von den zum dritten Zeitpunkt t₃ der Mobilstation 5 zugewiesenen Uplink- und Downlink-Übertragungskanälen zum Übertragen der Nutzdaten des eingehenden Rufes unterscheiden.

Es kann jedoch auch vorgesehen sein, die der Mobilstation 5 zum zweiten Zeitpunkt t₂ zugewiesenen Uplink- und Downlink-Kanäle auch für die ab dem dritten Zeitpunkt t₃ vorgesehene Nutzdatenübertragung für den eingehenden Ruf zu verwenden, wozu die zum zweiten Zeitpunkt t₂ eingerichteten Uplink- und Downlink-Kanäle zum dritten Zeitpunkt t₃ lediglich umkonfiguriert werden müssen. Die zweite Ausführungsform ist bezüglich der Variante mit Umkonfigurierung der Uplink- und Downlink-Kanäle in Figur 3 dargestellt.

Bei der zweiten Ausführungsform, die dadurch gekennzeichnet ist, daß bereits zum zweiten Zeitpunkt t₂ der Mobilstation 5 Uplink- und Downlinkkanäle eigens zugewiesen werden, findet das JP-Verfahren dennoch nach wie vor ab dem dritten Zeitpunkt t₃ statt und wird wie beschrieben in der "RAB Setup"-Nachricht der Mobilstation 5 signalisiert. Bei Verwendung der zum zweiten Zeitpunkt t₂ der Mobilstation 5 zugewiesenen Uplink- und Downlink-Kanäle auch nach dem dritten Zeitpunkt t₃ kann die Signalisierung des von der Basistation 1 ab dem dritten Zeitpunkt t₃ verwendeten JP-Verfahrens der Mobilstation 5 auch bei der erforderlichen Umkonfigurierung der Uplink- und Downlink-Kanäle erfolgen, die nach Versenden der "RAB Setup Complete"-Nachricht von der Mobilstation 5 zur Basisstation 1 und vor Austausch der Nutzdaten gemäß Figur 3 erfolgt. Die für die Umkonfigurierung von der Basisstation 1 zur Mobilstation 5 zu übertragenden Signalisierungsinformationen werden dabei von der Basisstation 1 noch nicht vorverzerrt und somit in der Mobilstation 5 noch nach dem JD-Verfahren entzerrt und detektiert. Für die Umkonfigurierung wird dabei von der Basisstation eine "TRCH Reconfiguration"-Nachricht an die Mobilstation 5 versendet, die aus der genannten Vorveröffentlichung "RRC Protocol Specification" bekannt ist. Mit dieser "TRCH Reconfiguration"-Nachricht werden die Parameter, wie beispielsweise die Datenrate, der bereits zum zweiten Zeitpunkt t₂ der Mobilstation 5 zugewiesenen Uplink- und Downlink-Kanäle umkonfiguriert. Über einen solchermaßen umkonfigurierten Uplink-Kanal sendet die Mobilstation 5 anschließend eine "TRCH Reconfig. Complete"-Nachricht, mit der sie der Basisstation 1 die erfolgreiche Umkonfigurierung des Uplink-Kanals mitteilt. Anschließend kann dann der Nutzdatenaustausch des eingehenden Rufes zwischen der Basisstation 1 und der Mobilstation 5 über die rekonfigurierten Uplink- und Downlink-Kanäle erfolgen. Da, wie bei der ersten Ausführungsform beschrieben, bereits in der "RAB Setup"-Nachricht das Nachrichtenelement "Downlink Timeslot Info" Informationen über eine Vorverzerrung in der Basisstation 1 enthalten kann, könnte bereits die "TRCH Reconfiguration"-Nachricht in der Basisstation vorverzerrt werden, beispielsweise nach dem JP-Verfahren, so daß bereits diese Nachricht bei Empfang in der Mobilstation 5 durch reinen Korrelationsempfang detektiert werden könnte. Es könnte jedoch auch vorgesehen sein, das erfindungsgemäße "Downlink Timeslot Info"-Nachrichtenelement erst in die "TRCH Reconfiguration"-Nachricht zu integrieren, so daß die "TRCH Reconfiguration"-Nachricht in der Mobilstation 5 noch nach dem JD-Verfahren entzerrt und detektiert wird und erst der anschließend erfolgende Nutzdatenaustausch des eingehenden Rufes und gegebenenfalls zusätzlich auszutauschende Signalisierungsinformationen in der Mobilstation 5 durch reinen Korrelationsempfang detektiert werden können, da sie in der Basisstation 1 nach dem JP-Verfahren vorverzerrt werden. Dabei ist es bereits vorgesehen, daß die aus der genannten Veröffentlichung "RRC Protocol Specification" bekannte "TRCH Reconfiguration"-Nachricht (TRCH = Transport Channel) das Nachrichtenelement "Downlink Timeslot Info" enthält, das die Mobilstation 5 u.a. darüber informiert, ob in der Basisstation 1 eine Aufbereitung, beispielsweise in Form einer Vorverzerrung der nachfolgend zu sendenden Daten, erfolgt.

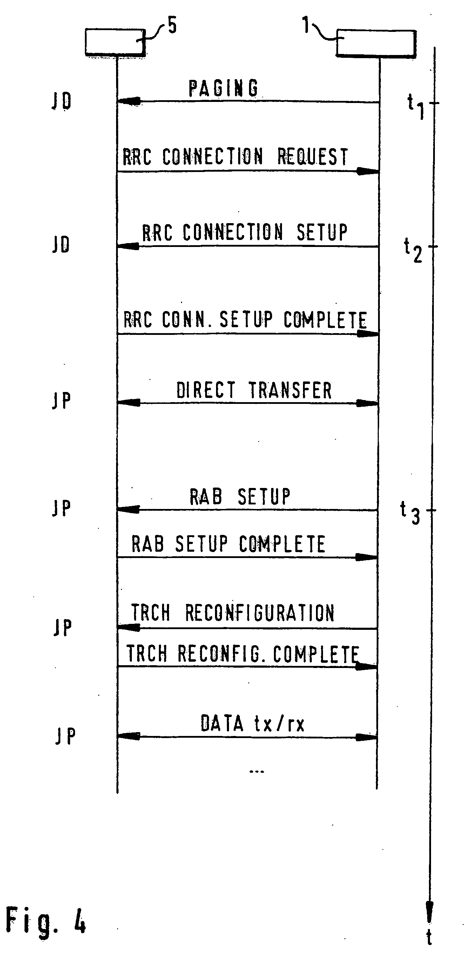

Da gemäß der zweiten Ausführungsform bereits ab dem zweiten Zeitpunkt t₂ ein der Übertragung von Signalisierungsinformationen von der Basisstation 1 zur Mobilstation 5 gewidmeter Downlink-Kanal vorgesehen ist, könnten bereits ab dem zweiten Zeitpunkt t₂ die von der Basisstation 1 zu sendenden Signalisierungsinformationen von der Basisstation 1 vorverzerrt werden, so daß sie in der Mobilstation 5 durch reinen Korrelationsempfang detektiert werden könnten, um Leistungsverbrauch in der Mobilstation 5 zum frühestmöglichen Zeitpunkt einzusparen. Ausgehend von der zweiten Ausführungsform ergibt sich daher eine dritte Ausführungsform gemäß Figur 4 dadurch, daß die Mobilstation 5 bereits in der "RRC Connection Request"-Nachricht ein Nachrichtenelement mit dem Namen "Initial UE Capability" an die Basisstation 1 sendet, das Informationen darüber enthält, ob die Mobilstation 5 eine Vorverzerrung, beispielsweise nach dem JP-Verfahren, oder eine sonstige Aufbereitung in der Basisstation 1 unterstützt. Die "RRC Connection Request"-Nachricht ist aus der genannten Veröffentlichung "RRC Protocol Specification" bekannt, genauso wie das zugehörige optionale Nachrichtenelement "Initial UE Capability". Dieses Nachrichtenelement "Initial UE Capability", welches bisher nicht mit Inhalt gefüllt ist, ist in Tabelle 5 dargestellt.

**Tabelle 5**

| Parameter | Referenz | Typ | Bemerkungen |
|---|---|---|---|
| | | | |

Dieses Nachrichtenelement kann gemäß der Erfindung wie in Tabelle 6 dargestellt abgewandelt werden:

**Tabelle 6**

| Parameter | Referenz | Typ | Bemerkungen |
|---|---|---|---|
| TDD-Modus (JP/JD) | | | Nur TDD-Modus |

In dem Beispiel nach Tabelle 6 teilt die Mobilstation 5 der Basisstation 1 mittels des neuen Nachrichtenelementes "Initial UE Capability" mit, daß es eine Vorverzerrung nach dem JP-Verfahren in der Basisstation 1 unterstützt. Dies erfolgt durch einen reinen Korrelationsempfang der empfangenen Daten. Die zum zweiten Zeitpunkt t₂ von der Basisstation 1 über den oben genannten FACH zur Mobilstation 5 übertragene "RRC Connection Setup"-Nachricht wird dann noch nicht vorverzerrt übertragen und in der Mobilstation 5 mittels des JD-Verfahrens entzerrt und detektiert. In dieser "RRC Connection Setup"-Nachricht ist jedoch wie bereits für die "TRCH Reconfiguration"-Nachricht beschrieben das Nachrichtenelement "Downlink Timeslot Info" vorgesehen, mittels dem die Basisstation 1 der Mobilstation 5 mitteilt, daß die Daten, die auf dem zur weiteren Signalisierung einzurichtenden gewidmeten Downlink-Kanal zur Mobilstation 5 in der Basisstation 1 nach dem JP-Verfahren vorverzerrt werden. Mit der "RRC Connection Setup"-Nachricht werden der Mobilstation 5 außerdem mindestens ein Downlink- und ein Uplink-Kanal für den weiteren Signalisierungsaustausch zugewiesen. Die Mobilstation 5 quittiert die "RRC Connection Setup"-Nachricht mit einer an die Basisstation 1 gesendeten "RRC Connection Setup Complete"-Nachricht, die bereits über den neu eingerichteten Uplink-Kanal an die Basisstation 1 übertragen wird und dieser mitteilt, daß dieser Uplink-Kanal erfolgreich eingerichtet wurde. Der Austausch der "UE Capability Info"-Nachricht und der "UE Capability Info Confirm"-Nachricht ist dann gemäß Figur 4 nicht mehr erforderlich, so daß anschließend dann in den zugewiesenen Uplink- und Downlink-Kanälen der "Direct Transfer" durchgeführt werden kann, wobei die von der Basisstation 1 an die Mobilstation 5 übertragenen Daten bereits nach dem JP-Verfahren vorverzerrt sind. Dies gilt auch für alle weiteren von der Basisstation 1 zur Mobilstation 5 für die aufgebaute Verbindung zu sendenden Signalisierungs- und Nutzdaten. Somit ist auch in der "RAB Setup"-Nachricht keine Information erforderlich, die die Mobilstation 5 über die JP-Vorverzerrung in der Basisstation 1 informiert. Eine solche Information ist jedoch in einer für eine gegebenenfalls erforderliche Umkonfigurierung der Uplink- und Downlink-Kanäle vorgesehenen "TRCH Reconfiguration"-Nachricht erforderlich, da bei einer Umkonfigurierung der Mobilstation 5 eventuell neue Zeitschlitze zugewiesen werden.

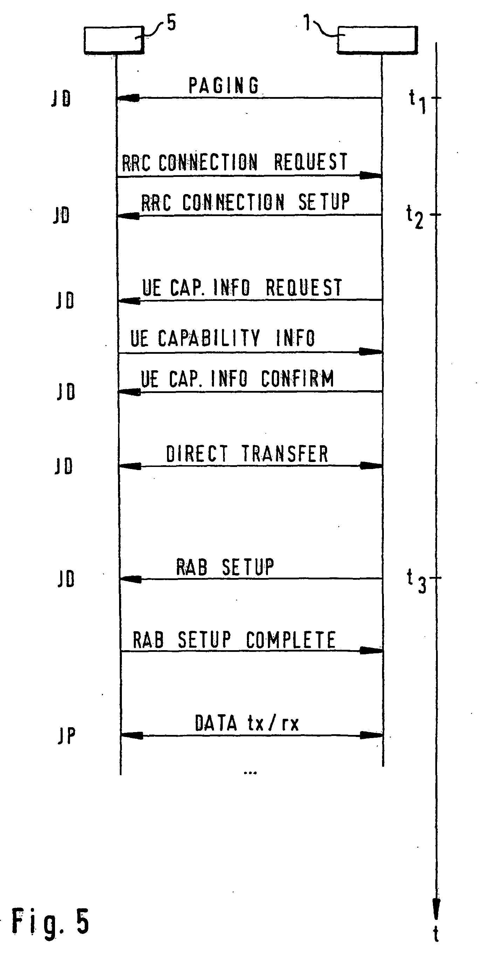

Gemäß Figur 5 ist eine vierte Ausführungsform dargestellt, die der ersten Ausführungsform entspricht, mit dem Unterschied, daß eine zusätzliche "UE Capability Information Request"-Nachricht eingeführt wurde, mit der die Basisstation 1 die Mobilstation 5 dazu veranlaßt, die "UE Capability Information"-Nachricht an die Basisstation 1 zu versenden. Die "UE Capability Information Request"-Nachricht wird dabei von der Basisstation 1 im Anschluß an die "RRC Connection Setup"-Nachricht an die Mobilstation 5 versendet und dort ebenfalls nach dem Joint Detection Verfahren entzerrt und detektiert. Die "UE Capability Information Request"-Nachricht ist ebenfalls aus der genannten Veröffentlichung "RRC Protocol Specification" bekannt. In dieser "UE Capability Information Request"-Nachricht wird dabei normalerweise eine Information über den Typ der mit den Signalisierungsinformationen auszutauschenden Signalisierungsdaten zur Mobilstation 5 übertragen. Erfindungsgemäß könnte in der "UE Capability Information Request"-Nachricht ein Nachrichtenelement zusätzlich aufgenommen werden, das die Mobilstation 5 danach abfragt, welche Arten der Aufbereitung in der Basisstation 1 durch die Mobilstation 5 unterstützt werden. Dabei können in diesem zusätzlichen Nachrichtenelement oder einem weiteren zusätzlichen Nachrichtenelement der "UE Capability Information Request"-Nachricht auch Informationen darüber von der Basisstation 1 zur Mobilstation 5 übertragen werden, die angeben, welche Arten der Aufbereitung von zu sendenden Daten in der Basisstation 1 möglich sind. In dem hier beschriebenen Beispiel könnte in einem solchen zusätzlichen Nachrichtenelement beispielsweise angegeben werden, daß die vier vorbeschriebenen Arten der Aufbereitung durch die Basisstation 1 möglich sind, wenn man die Nichtaufbereitung auch als Aufbereitungsart mitzählt. Insbesondere könnte dabei in dem hier beschriebenen Beispiel für die mögliche Vorverzerrung in der Basisstation 1 das JP-Verfahren angegeben werden. Dieses zusätzliche Nachrichtenelement mit den Angaben von von der Basisstation 1 unterstützten Arten der Aufbereitung der zu sendenden Daten entspricht dann, enthält oder ist enthalten in der gemäß Figur 1 beschriebenen ersten Nachricht.

Das oder die zusätzlichen Nachrichtenelemente können optional auch bereits mit der "RRC Connection Setup"-Nachricht von der Basisstation 1 an die Mobilstation 5 versendet werden, um die "UE Capability Information Request"-Nachricht einzusparen. Da in der "RRC Connection Setup"-Nachricht bereits das "Downlink Timeslot Info"-Nachrichtenelement übertragen wird, könnte oder könnten das oder die zusätzlichen Nachrichtenelemente auch als Bestandteil des "Downlink Timeslot Info"-Nachrichtenelementes übertragen werden, so daß in der "RRC Connection Setup"-Nachricht keine zusätzlichen Nachrichtenelemente erforderlich sind.

Diejenigen Nachrichtenelemente der beschriebenen ersten drei Ausführungsformen, die von der Basisstation 1 zur Mobilstation 5 übertragen werden und Informationen darüber enthalten, ob eine Aufbereitung der von der Basisstation 1 an die Mobilstation 5 zu sendenden Daten in der Basisstation 1 erfolgt, entsprechen somit der, enthalten die oder sind enthalten in der gemäß Figur 1 beschriebenen dritten Nachricht. Diejenigen Nachrichtenelemente, die von der Mobilstation 5 zur Basisstation 1 in den ersten drei vorgenannten Ausführungsformen übertragen werden und eine Information darüber enthalten, ob von der Mobilstation 5 eine Aufbereitung der von der Basisstation 1 zu sendenden Daten in der Basisstation 1 unterstützt wird, bzw. welche Art oder welche Arten einer solchen Aufbereitung in der Basisstation 1 von der Mobilstation 5 unterstützt werden entsprechen der, enthalten die oder sind enthalten in der gemäß Figur 1 beschriebenen zweiten Nachricht.

Bei den beschriebenen vier Ausführungsformen wurde nur beispielhaft angenommen, daß die Aufbereitung in der Basisstation 1 nach dem JP-Verfahren erfolgt. Es kann jedoch mittels der genannten Nachrichtenelemente jede beliebige Art von Aufbereitung der zu sendenden Daten in der Basisstation 1 signalisiert werden. Dabei kann die Signalisierung durch Setzen eines oder mehrerer Bits im entsprechenden Nachrichtenelement realisiert werden. Dabei kann vereinbart werden, daß ein gesetztes Bit in der dritten Nachricht für eine spezielle von der Basisstation 1 durchgeführte Art der Aufbereitung der zu sendenden Daten steht, wohingegen ein Nichtsetzen dieses Bits dafür steht, daß diese Art der Aufbereitung in der Basisstation 1 nicht durchgeführt wird. Ein gesetztes Bit in der zweiten Nachricht kann dahingehend vereinbart sein, daß eine spezielle Art der Aufbereitung der zu sendenden Daten von der Mobilstation 5 unterstützt wird. Ein Nichtsetzen dieses Bits bedeutet dann, daß diese Art der Aufbereitung von der Mobilstation 5 nicht unterstützt wird. Entsprechendes kann für die erste Nachricht vereinbart sein. Ein gesetztes Bit in der ersten Nachricht kann dahingehend vereinbart sein, daß eine spezielle Art der Aufbereitung der zu sendenden Daten von der Basisstation 1 unterstützt wird. Ein Nichtsetzen dieses Bits bedeutet dann, daß diese Art der Aufbereitung von der Basisstation 1 nicht unterstützt wird.

Zusätzlich kann die erste Nachricht an der Basisstation 1 mit einer generellen Systeminformation, wie sie aus der genannten Veröffentlichung "RRC Protocol Specification" bekannt ist, ständig bzw. in regelmäßigen Abständen an alle zum Mobilfunknetz gehörenden Mobilstationen ausgestrahlt werden. Diese erste Nachricht kann ein weiteres Nachrichtenelement beinhalten, welches den Mobilstationen anzeigt, ob bzw. welche Art oder Arten der Aufbereitung von zu sendenden Daten das Mobilfunknetz bzw. die zum Mobilfunknetz gehörende Basisstation 1 unterstützt. Dieses weitere Nachrichtenelement kann dabei gemäß Tabelle 6 ausgebildet sein, wird dann jedoch von der Basisstation 1 versendet und heißt dann beispielsweise "Base station capability information"-Nachrichtenelement.

Gemäß Figur 6 ist ein Teil des Mobilfunknetzes dargestellt, wobei die Sendestation 1 eine erste Basisstation darstellt, die eine erste Funkzelle 1000 aufspannt und wobei eine weitere Sendestation 2 vorgesehen ist, die eine zweite Basisstation darstellt und die eine zweite Funkzelle 2000 aufspannt, wobei die erste Funkzelle 1000 und die zweite Funkzelle 2000 einander benachbart sind und sich in einem Übergangsbereich 3000 leicht überlappen. Die Mobilstation 5 hat sich dabei gemäß Figur 6 innerhalb der ersten Funkzelle 1000 in den Übergangsbereich 3000 bewegt. Die Sendestation 1 stellt dann fest, daß die Mobilstation 5 bezüglich der zweiten Basisstation 2 Signale mit höherer Empfangsqualität austauschen kann als mit der ersten Basisstation 1. Die erste Basisstation 1 bereitet daher eine Übernahme der einzurichtenden oder der schon eingerichteten Verbindung durch die zweite Basisstation 2 vor. Eine solche Übernahme wird als "Handover" bezeichnet. Zur Vorbereitung und Organisation des Handover müssen zwischen der ersten Basisstation 1 und der zweiten Basisstation 2 entsprechende Signalisierungsinformationen ausgetauscht werden. Dabei kann es vorgesehen sein, daß die erste Basisstation 1 mit diesen Signalisierungsinformationen die dritte Nachricht zur Mobilstation 5 überträgt, die dann jedoch eine Information darüber enthält, ob nach erfolgtem Handover in der zweiten Basisstation 2 eine Aufbereitung der zu sendenden Daten zur Erhöhung der Empfangsqualität dieser Daten an der Mobilstation 5 durchgeführt wird und wenn ja nach welcher Art beziehungsweise nach welchen Arten diese Aufbereitung erfolgt. Auf diese Weise kann die Mobilstation 5 im Falle eines Handover vor dem Wechsel von der ersten Basisstation 1 zur zweiten Basisstation 2, das heißt vor Einrichtung eines gewidmeten Übertragungskanals zwischen der zweiten Basisstation 2 und der Mobilstation 5, in der beschriebenen Weise entscheiden, wie sie die von der zweiten Basisstation 2 zu sendenden Daten entzerren und detektieren muß, um einen optimalen Datenempfang gewährleisten zu können, bei dem möglichst wenig Leistung verbraucht wird. Die möglichen Arten der Aufbereitung der von der zweiten Basisstation 2 zu sendenden Daten entsprechen dabei beispielhaft den von der ersten Basisstation 1 unterstützten Arten, können jedoch auch davon verschieden sein. Es könnte von der zweiten Basisstation 2 auch nur eine Art der Aufbereitung unterstützt werden.

## Patentansprüche

1. Verfahren zur Übertragung von Signalisierungsinformationen zwischen einer Sendestation (1), insbesondere einer Basisstation, und einer Empfangsstation (5), insbesondere einer Mobilstation, **dadurch gekennzeichnet, daß** mit den Signalisierungsinformationen eine dritte Nachricht von der Sendestation (1) an die Empfangsstation (5) übertragen wird, die eine Information darüber enthält, ob in der Sendestation (1) oder in einer nachfolgend der Empfangsstation (5) zugeordneten weiteren Sendestation (2), vorzugsweise beim Wechsel der Empfangsstation von einer ersten Funkzelle in eine zweite Funkzelle eines Funknetzes, eine Aufbereitung von zu sendenden Daten zur Erhöhung der Empfangsqualität dieser Daten an der Empfangsstation (5) durch Maßnahmen, die einen Übertragungskanal zwischen der Sendestation (1, 2) und der Empfangsstation (5) betreffen, durchgeführt wird.

2. Verfahren nach Anspruch 1, **dadurch gekennzeichnet, daß** mit der dritten Nachricht eine Information darüber von der Sendestation (1) an die Empfangsstation 5 übertragen wird, welcher Art die Aufbereitung der zu sendenden Daten ist.

3. Verfahren nach Anspruch 1 oder 2, **dadurch gekennzeichnet, daß** die dritte Nachricht bezüglich genau eines Übertragungskanals für die Übertragung der zu sendenden Daten übertragen wird.

4. Verfahren nach Anspruch 1, 2 oder 3, **dadurch gekennzeichnet, daß** die dritte Nachricht bezüglich mehrerer Übertragungskanäle für die Übertragung der zu sendenden Daten übertragen wird, wenn die Art der Aufbereitung in diesen Übertragungskanälen gleich ist.

5. Verfahren nach einem der vorherigen Ansprüche, **dadurch gekennzeichnet, daß** mit der dritten Nachricht eine Information darüber übertragen wird, ob die von der Sendestation (1) oder von der nachfolgend der Empfangsstation (5) zugeordneten weiteren Sendestation (2) zu versendenden Daten von einer Antenne (10) oder von mehreren Antennen (15) abgestrahlt werden.

6. Verfahren nach einem der vorherigen Ansprüche, **dadurch gekennzeichnet, daß** mit der dritten Nachricht eine Information darüber übertragen wird, ob in der Sendestation (1) oder in der nachfolgend der Empfangsstation (5) zugeordneten weiteren Sendestation (2) eine Vorverzerrung der zu sendenden Daten, insbesondere nach einem Joint Predistortion, JP, Verfahren, durchgeführt wird.

7. Verfahren nach Anspruch 6, **dadurch gekennzeichnet, daß** mit der dritten Nachricht eine Information darüber übertragen wird, ob eine Vorverzerrung in Abhängigkeit der geschätzten Impulsantwort mindestens eines Zeitschlitzübertragungskanals zwischen der Empfangsstation (5) und der Sendestation (1) oder der nachfolgend der Empfangsstation (5) zugeordneten weiteren Sendestation (2) durchgeführt wird.

8. Verfahren nach einem der vorherigen Ansprüche, **dadurch gekennzeichnet, daß** mit den Signalisierungsinformationen vor der dritten Nachricht eine zweite Nachricht von der Empfangsstation (5) zur Sendestation (1) übertragen wird, die eine Information darüber enthält, welche Art oder welche Arten von Aufbereitung der von der Sendestation (1) zu sendenden Daten von der Empfangsstation (5) zur Detektion dieser Daten unterstützt wird beziehungsweise unterstützt werden.

9. Verfahren nach Anspruch 8, **dadurch gekennzeichnet, daß** die zu sendenden Daten in der Sendestation (1) in Abhängigkeit der zweiten Nachricht in einer Art aufbereitet werden, die von der Empfangsstation (5) zur Detektion der Daten unterstützt wird.

10. Verfahren nach Anspruch 9, **dadurch gekennzeichnet, daß** die so aufbereiteten zu sendenden Daten in einem Übertragungskanal übertragen werden, der nur der Verbindung zwischen der Sendestation (1) und der Empfangsstation (5) gewidmet ist.

11. Verfahren nach Anspruch 8, 9 oder 10, **dadurch gekennzeichnet, daß** als zu sendende Daten die Signalisierungsinformationen von der Sendestation (1) zur Empfangsstation (5) frühestens dann aufbereitet übertragen werden, wenn anhand der zweiten Nachricht die von der Empfangsstation (5) unterstützte Art beziehungsweise die von der Empfangsstation (5) unterstützten Arten der Aufbereitung bei der Sendestation (1) bekannt sind, wobei die Aufbereitung in einer von der Empfangsstation (5) unterstützten Art erfolgt, und wenn die dritte Nachricht an die Empfangsstation (5) abgesetzt wurde.

12. Verfahren nach einem der vorherigen Ansprüche, **dadurch gekennzeichnet, daß** mit den Signalisierungsinformationen vor der dritten Nachricht eine erste Nachricht von der Sendestation (1) zur Empfangsstation (5) übertragen wird, die eine Information darüber enthält, welche Art oder welche Arten von Aufbereitung der zu sendenden Daten von der Sendestation (1) unterstützt wird beziehungsweise unterstützt werden.

13. Verfahren nach Anspruch 12, **dadurch gekennzeichnet, daß** die erste Nachricht in einem mehreren Empfangsstationen zugänglichen Übertragungskanal übertragen wird.

14. Verfahren nach einem der vorherigen Ansprüche, **dadurch gekennzeichnet, daß** Signalisierungsinformationen frühestens nach Aussenden der dritten Nachricht aufbereitet von der Sendestation (1) oder von der nachfolgend der Empfangsstation (5) zugeordneten weiteren Sendestation (2) zur Empfangsstation (5) übertragen werden und daß die Signalisierungsinformationen zuvor in einem mehreren Empfangsstationen zugänglichen Übertragungskanal übertragen werden.

15. Empfangsstation (5), insbesondere Mobilstation, zur Durchführung aller Schritte eines Verfahrens nach einem der vorherigen Ansprüche, **dadurch gekennzeichnet, daß** erste Auswertemittel (20) vorgesehen sind, die eine dritte Nachricht von einer Sendestation (1), insbesondere einer Basisstation, danach auswertet, ob von der Sendestation (1) oder von einer nachfolgend der Empfangsstation (5) zugeordneten weiteren Sendestation (2) an die Empfangsstation (5) zu sendende Daten zur Erhöhung der Empfangsqualität von der Sendestation (1) oder von der nachfolgend der Empfangsstation (5) zugeordneten weiteren Sendestation (2) durch Maßnahmen, die einen Übertragungskanal zwischen der Sendestation (1, 2) und der Empfangsstation (5) betreffen, aufbereitet wurden.

16. Empfangsstation (5) nach Anspruch 15, **dadurch gekennzeichnet, daß** die ersten Auswertemittel (20) die dritte Nachricht danach auswerten, nach welcher Art die zu sendenden Daten von der Sendestation (1) oder von der nachfolgend der Empfangsstation (5) zugeordneten weiteren Sendestation (2) aufbereitet wurden.

17. Empfangsstation (5) nach Anspruch 15 oder 16, **dadurch gekennzeichnet, daß** erste Auswahlmittel (25) vorgesehen sind, die in Abhängigkeit der von den ersten Auswertemitteln (20) ausgewerteten dritten Nachricht Detektionsmittel (30, 35) auswählen, mit denen eine Detektion der von der Sendestation (1) oder von der nachfolgend der Empfangsstation (5) zugeordneten weiteren Sendestation (2) zu sendenden Daten möglich ist.

18. Empfangsstation (5) nach Anspruch 15, 16 oder 17, **dadurch gekennzeichnet, daß** erste Nachrichtenerzeugungsmittel (40) vorgesehen sind, die in Abhängigkeit der von der Empfangsstation (5) unterstützten Art oder Arten der Aufbereitung von der Sendestation (1) zu sendenden Daten eine zweite Nachricht erzeugen und an die Sendestation (1) absetzen.

19. Empfangsstation (5) nach einem der Ansprüche 15 bis 18, **dadurch gekennzeichnet, daß** die ersten Auswertemittel (20) eine erste Nachricht von der Sendestation (1) dahingehend auswerten, welche Art oder welche Arten der Aufbereitung von zu sendenden Signalen die Sendestation (1) unterstützt, daß die ersten Auswertemittel (20) prüfen, ob diese Art oder diese Arten der Aufbereitung auch von der Empfangsstation (5) unterstützt wird beziehungsweise unterstützt werden und daß die ersten Auswertemittel (20) die ersten Nachrichtenerzeugungsmittel (40) derart ansteuern, daß mindestens eine Art der Aufbereitung in der zweiten Nachricht angegeben wird, die sowohl von der Sendestation (1) als auch von der Empfangsstation (5) unterstützt wird.

20. Sendestation (1), insbesondere Basisstation, zur Durchführung aller Schritte eines Verfahrens nach einem der Ansprüche 1 bis 14, **dadurch gekennzeichnet, daß** zweite Nachrichtenerzeugungsmittel (45) vorgesehen sind, die eine dritte Nachricht erzeugen, die Informationen darüber enthält, daß in der Sendestation (1) oder in einer nachfolgend der Empfangsstation (5) zugeordneten weiteren Sendestation (2) eine Aufbereitung von zu sendenden Daten zur Erhöhung der Empfangsqualität dieser Daten an einer Empfangsstation (5), insbesondere einer Mobilstation, durch Maßnahmen, die einen Übertragungskanal zwischen der Sendestation (1, 2) und der Empfangsstation (5) betreffen, durchgeführt wird, und daß die zweiten Nachrichtenerzeugungsmittel (45) die dritte Nachricht an die Empfangsstation (5) absetzen.

21. Sendestation (1) nach Anspruch 20, **dadurch gekennzeichnet, daß** die zweiten Nachrichtenerzeugungsmittel (45) in der dritten Nachricht die Art der in der Sendestation (1) oder in der nachfolgend der Empfangsstation (5) zugeordneten weiteren Sendestation (2) durchgeführten Aufbereitung der zu sendenden Daten angeben.

22. Sendestation (1) nach Anspruch 20 oder 21, **dadurch gekennzeichnet, daß** die zweiten Nachrichtenerzeugungsmittel (45) vor Absetzen der dritten Nachricht eine erste Nachricht erzeugen, die Informationen über die von der Sendestation (1) unterstützte Art oder die von der Sendestation (1) unterstützten Arten der Aufbereitung von der Sendestation (1) zu sendenden Daten enthalten, und daß die zweiten Nachrichtenerzeugungsmittel (45) die erste Nachricht an die Empfangsstation (5) absetzen.

23. Sendestation (1) nach Anspruch 20, 21 oder 22, **dadurch gekennzeichnet, daß** zweite Auswertemittel (50) vorgesehen sind, die eine zweite Nachricht von der Empfangsstation (5) dahingehend auswerten, welche Art oder welche Arten der Aufbereitung von zu sendenden Signalen die Empfangsstation (5) unterstützt, daß die zweiten Auswertemittel (50) prüfen, ob diese Art oder diese Arten der Aufbereitung auch von der Sendestation (1) unterstützt wird beziehungsweise unterstützt werden, daß die zweiten Auswertemittel (50) mindestens eine Art der Aufbereitung auswählen, die sowohl von der Sendestation (1) als auch von der Empfangsstation (5) unterstützt wird, daß die zweiten Auswertemittel (50) die zweiten Nachrichtenerzeugungsmittel (45) derart ansteuern, die mindestens eine ausgewählte Art der Aufbereitung in der dritten Nachricht anzugeben, und daß die zweiten Auswertemittel (50) eine Aufbereitungseinheit (55) so ansteuern, daß sie die zu sendenden Daten gemäß der mindestens einen ausgewählten Art aufbereitet.

24. Sendestation (1) nach Anspruch 23, **dadurch gekennzeichnet, daß** die Aufbereitungseinheit (55) eine Vorverzerrung, insbesondere eine Joint Predistortion Vorverzerrung, durchführt.

25. Sendestation (1) nach Anspruch 23 oder 24, **dadurch gekennzeichnet, daß** die Aufbereitungseinheit (55) die zu sendenden Signale über mehrere Antennen (15) abstrahlt.

26. Verfahren zur Versendung eines Nachrichtenelementes von einer Sendestation (1), insbesondere einer Basisstation, zu einer Empfangsstation (5), insbesondere einer Mobilstation, insbesondere im Rahmen eines Austauschs von Signalisierungsinformationen, **dadurch gekennzeichnet, daß** mit dem Nachrichtenelement Informationen darüber übertragen werden, ob zu versendende Daten zur Erhöhung der Empfangsqualität an der Empfangsstation (5) von der Sendestation (1) oder von einer nachfolgend der Empfangsstation (5) zugeordneten weiteren Sendestation (2) durch Maßnahmen, die einen Übertragungskanal zwischen der Sendestation (1, 2) und der Empfangsstation (5) betreffen, aufbereitet sind.

27. Verfahren nach Anspruch 26, **dadurch gekennzeichnet, daß** mit dem Nachrichtenelement Informationen darüber übertragen werden, nach welcher Art oder nach welchen Arten die zu versendenden Signale aufbereitet sind.

28. Verfahren zur Versendung eines Nachrichtenelementes von einer Sendestation (1), insbesondere einer Basisstation, zu einer Empfangsstation (5), insbesondere einer Mobilstation, insbesondere im Rahmen eines Austauschs von Signalisierungsinformationen, **dadurch gekennzeichnet, daß** mit dem Nachrichtenelement Informationen darüber übertragen werden, welche Art oder welche Arten der Aufbereitung von zu versendenden Signalen von der Sendestation (1) oder von einer nachfolgend der Empfangsstation (5) zugeordneten weiteren Sendestation (2) unterstützt werden zur Erhöhung der Empfangsqualität an der Empfangsstation (5) durch Maßnahmen, die einen Übertragungskanal zwischen der Sendestation (1, 2) und der Empfangsstation (5) betreffen.

29. Verfahren zur Versendung eines Nachrichtenelementes von einer Empfangsstation (5), insbesondere einer Mobilstation, zu einer Sendestation (1), insbesondere einer Basisstation, insbesondere im Rahmen eines Austauschs von Signalisierungsinformationen, **dadurch gekennzeichnet, daß** mit dem Nachrichtenelement Informationen darüber übertragen werden, welche Art oder welche Arten der Aufbereitung von der Sendestation (1) oder von einer nachfolgend der Empfangsstation (5) zugeordneten weiteren Sendestation (2) zu versendenden Signalen zur Erhöhung der Empfangsqualität an der Empfangsstation (5) durch Maßnahmen, die einen Übertragungskanal zwischen der Sendestation (1, 2) und der Empfangsstation (5) betreffen, von der Empfangsstation (5) bei der Detektion dieser Signale unterstützt werden.

## Claims

1. Method of transmitting signalling information between a transmitting station (1), particularly a base station, and a receiving station (5), particularly a mobile station, **characterized in that** the signalling information is accompanied by the transmission of a third message from the transmitting station (1) to the receiving station (5) which contains information about whether the transmitting station (1) or a further transmitting station (2), subsequently associated with the receiving station (5), performs conditioning, preferably when the receiving station changes from a first radio cell to a second radio cell in a radio network, of data which are to be transmitted in order to increase the reception quality of these data at the receiving station (5) by means of measures which relate to a transmission channel between the transmitting station (1, 2) and the receiving station (5).

2. Method according to Claim 1, **characterized in that** the third message is used to transmit information from the transmitting station (1) to the receiving station (5) about the type of the conditioning of the data which are to be transmitted.

3. Method according to Claim 1 or 2, **characterized in that** the third message is transmitted with regard to precisely one transmission channel for the transmission of the data which are to be transmitted.

4. Method according to Claim 1, 2 or 3, **characterized in that** the third message is transmitted with regard to a plurality of transmission channels for the transmission of the data which are to be transmitted if the type of the conditioning in these transmission channels is the same.

5. Method according to one of the preceding claims, **characterized in that** the third message is used to transmit information about whether the data which are to be sent from the transmitting station (1) or from the further transmitting station (2), subsequently associated with the receiving station (5), are emitted by an antenna (10) or by a plurality of antennas (15).

6. Method according to one of the preceding claims, **characterized in that** the third message is used to transmit information about whether the transmitting station (1) or the further transmitting station (2), subsequently associated with the receiving station (5), performs predistortion of the data which are to be transmitted, particularly on the basis of a Joint Predistortion, JP, method.

7. Method according to Claim 6, **characterized in that** the third message is used to transmit information about whether predistortion is performed on the basis of the estimated impulse response of at least one timeslot transmission channel between the receiving station (5) and the transmitting station (1) or the further transmitting station (2), subsequently associated with the receiving station (5).

8. Method according to one of the preceding claims, **characterized in that** the signalling information is accompanied by the transmission, prior to the third message, of a second message from the receiving station (5) to the transmitting station (1) which contains information about what type or what types of conditioning of the data which are to be transmitted from the transmitting station (1) is supported or are supported by the receiving station (5) in order to detect these data.

9. Method according to Claim 8, **characterized in that** the data which are to be transmitted are conditioned in the transmitting station (1) on the basis of the second message in a manner which is supported by the receiving station (5) in order to detect the data.

10. Method according to Claim 9, **characterized in that** the thus conditioned data which are to be transmitted are transmitted in a transmission channel which is just devoted to the connection between the transmitting station (1) and the receiving station (5).

11. Method according to Claim 8, 9 or 10, **characterized in that**, as the data which are to be transmitted, the signalling information is transmitted in conditioned form from the transmitting station (1) to the receiving station (5) no earlier than when the type of conditioning supported by the receiving station (5) or the types of conditioning supported by the receiving station (5) are known to the transmitting station (1) on the basis of the second message, with the conditioning being performed in a manner which is supported by the receiving station (5), and when the third message has been sent to the receiving station (5).

12. Method according to one of the preceding claims, **characterized in that** the signalling information is accompanied by the transmission, prior to the third message, of a first message from the transmitting station (1) to the receiving station (5) which contains information about what type or what types of conditioning of the data which are to be transmitted is supported or are supported by the transmitting station (1) .

13. Method according to Claim 12, **characterized in that** the first message is transmitted in a transmission channel which is accessible to a plurality of receiving stations.

14. Method according to one of the preceding claims, **characterized in that** signalling information is transmitted from the transmitting station (1) or from the further transmitting station (2), subsequently associated with the receiving station (5), to the receiving station (5) in conditioned form no earlier than after the third message is sent and **in that** the signalling information is transmitted beforehand in a transmission channel which is accessible to a plurality of receiving stations.

15. Receiving station (5), particularly a mobile station, for performing all the steps of a method according to one of the preceding claims, **characterized in that** first evaluation means (20) are provided which evaluate a third message from a transmitting station (1), particularly a base station, according to whether the transmitting station (1) or a further transmitting station (2), subsequently associated with the receiving station (5), has conditioned data which are to be transmitted to the receiving station (5) in order to increase the reception quality from the transmitting station (1) or from the further transmitting station (2), subsequently associated with the receiving station (5), by means of measures which relate to a transmission channel between the transmitting station (1, 2) and the receiving station (5).

16. Receiving station (5) according to Claim 15, **characterized in that** the first evaluation means (20) evaluate the third message according to the type according to which the data which are to be transmitted have been conditioned by the transmitting station (1) or by the further transmitting station (2), subsequently associated with the receiving station (5).

17. Receiving station (5) according to Claim 15 or 16, **characterized in that** first selection means (25) are provided which take the third message evaluated by the first evaluation means (20) as a basis for selecting detection means (30, 35) which allow detection of the data which are to be transmitted from the transmitting station (1) or from the further transmitting station (2), subsequently associated with the receiving station (5).

18. Receiving station (5) according to Claims 15, 16 or 17, **characterized in that** first message generation means (40) are provided which take the type or types of conditioning of data which are to be transmitted from the transmitting station (1) that is/are supported by the receiving station (5) as a basis for generating a second message and sending it to the transmitting station (1).

19. Receiving station (5) according to one of Claims 15 to 18, **characterized in that** the first evaluation means (20) evaluate a first message from the transmitting station (1) to determine what type or what types of conditioning of signals which are to be transmitted the transmitting station (1) supports, **in that** the first evaluation means (20) check whether this type or these types of conditioning is supported or are supported by the receiving station (5) too, and **in that** the first evaluation means (20) actuate the first message generation means (40) such that at least one type of conditioning which is supported both by the transmitting station (1) and by the receiving station (5) is indicated in the second message.

20. Transmitting station (1), particularly a base station, for performing all steps in a method according to one of Claims 1 to 14, **characterized in that** second message generation means (45) are provided which generate a third message which contains information about the transmitting station (1) or a further transmitting station (2), subsequently associated with the receiving station (5), performing conditioning of data which are to be transmitted in order to increase the reception quality of these data at a receiving station (5), particularly a mobile station, by means of measures which relate to a transmission channel between the transmitting station (1, 2) and the receiving station (5), and **in that** the second message generation means (45) send the third message to the receiving station (5).

21. Transmitting station (1) according to Claim 20, **characterized in that** the second message generation means (45) indicate in the third message the type of conditioning of the data which are to be transmitted that is performed in the transmitting station (1) or in the further transmitting station (2), subsequently associated with the receiving station (5).

22. Transmitting station (1) according to Claim 20 or 21, **characterized in that** the second message generation means (45) generate a first message, prior to the third message being sent, which contains information about the type or types of conditioning of data which are to be transmitted from the transmitting station (1) that is/are supported by the transmitting station (1), and **in that** the second message generation means (45) send the first message to the receiving station (5).

23. Transmitting station (1) according to Claim 20, 21 or 22, **characterized in that** second evaluation means (50) are provided which evaluate a second message from the receiving station (5) to determine what type or what types of conditioning of signals which are to be transmitted the receiving station (5) supports, **in that** the second evaluation means (50) check whether this type or these types of conditioning is supported or are supported by the transmitting station (1) too, **in that** the second evaluation means (50) select at least one type of conditioning which is supported both by the transmitting station (1) and by the receiving station (5), **in that** the second evaluation means (50) actuate the second message generation means (45) such that the at least one selected type of conditioning is indicated in the third message, and **in that** the second evaluation means (50) actuate a conditioning unit (55) such that it conditions the data which are to be transmitted on the basis of the at least one selected type.

24. Transmitting station (1) according to Claim 23, **characterized in that** the conditioning unit (55) performs predistortion, particularly Joint Predistortion.

25. Transmitting station (1) according to Claim 23 or 24, **characterized in that** the conditioning unit (55) emits the signals which are to be transmitted via a plurality of antennas (15).

26. Method for sending a message element from a transmitting station (1), particularly a base station, to a receiving station (5), particularly a mobile station, particularly within the context of interchange of signalling information, **characterized in that** the message element is used to transmit information about whether data which are to be sent have been conditioned, in order to increase the reception quality at the receiving station (5), by the transmitting station (1) or by a further transmitting station (2), subsequently associated with the receiving station (5), by means of measures which relate to a transmission channel between the transmitting station (1, 2) and the receiving station (5).

27. Method according to Claim 26, **characterized in that** the message element is used to transmit information about the type or types taken as a basis for conditioning the signals which are to be sent.

28. Method for sending a message element from a transmitting station (1), particularly a base station, to a receiving station (5), particularly a mobile station, particularly within the context of interchange of signalling information, **characterized in that** the message element is used to transmit information about what type or what types of conditioning of signals which are to be sent are supported by the transmitting station (1) or by a further transmitting station (2), subsequently associated with the receiving station (5), in order to increase the reception quality at the receiving station (5) by means of measures which relate to a transmission channel between the transmitting station (1, 2) and the receiving station (5).

29. Method for sending a message element from a receiving station (5), particularly a mobile station, to a transmitting station (1), particularly a base station, particularly within the context of interchange of signalling information, **characterized in that** the message element is used to transmit information about what type or what types of conditioning of signals which are to be sent from the transmitting station (1) or from a further transmitting station (2), subsequently associated with the receiving station (5), in order to increase the reception quality at the receiving station (5) by means of measures which relate to a transmission channel between the transmitting station (1, 2) and the receiving station (5), are supported by the receiving station (5) when these signals are detected.

## Revendications

1. Procédé de transmission d'informations de signalisation entre une station émettrice (1), notamment une station de base, et une station réceptrice (5), notamment une station mobile, **caractérisé en ce qu'**avec les informations de signalisation est transmis un troisième message de la station émettrice (1) vers la station réceptrice (5), lequel contient une information indiquant si, dans la station émettrice (1) ou dans une autre station émettrice (2) suivante associée à la station réceptrice (5), de préférence lors du changement de station réceptrice d'une première cellule radioélectrique vers une deuxième cellule radioélectrique d'un réseau radio, est effectuée une préparation des données à envoyer en vue d'accroître la qualité de réception de ces données au niveau de la station réceptrice (5) par des mesures qui concernent un canal de transmission entre la station émettrice (1, 2) et la station réceptrice (5).

2. Procédé selon la revendication 1, **caractérisé en ce qu'**avec le troisième message est transmise une information de la station émettrice (1) à la station réceptrice (5) qui indique le mode de préparation des données à envoyer.

3. Procédé selon la revendication 1 ou 2, **caractérisé en ce que** le troisième message est transmis en référence à exactement un canal de transmission pour la transmission des données à envoyer.

4. Procédé selon la revendication 1, 2 ou 3, **caractérisé en ce que** le troisième message est transmis en référence à plusieurs canaux de transmission pour la transmission des données à envoyer lorsque le mode de préparation est identique dans ces canaux de transmission.

5. Procédé selon l'une des revendications précédentes, **caractérisé en ce qu'**avec le troisième message est transmise une information indiquant si les données à envoyer par la station émettrice (1) ou par l'autre station émettrice (2) suivante associée à la station réceptrice (5) sont rayonnées par une antenne (10) ou par plusieurs antennes (15).

6. Procédé selon l'une des revendications précédentes, **caractérisé en ce qu'**avec le troisième message est transmise une information indiquant si dans la station émettrice (1) ou dans l'autre station émettrice (2) suivante associée à la station réceptrice (5) est réalisée une pré-distorsion des données à envoyer, notamment d'après un procédé de pré-distorsion commune, JP.

7. Procédé selon la revendication 6, **caractérisé en ce qu'**avec le troisième message est transmise une information indiquant si une pré-distorsion est effectuée en fonction de la réponse impulsionnelle estimée d'au moins un canal de transmission à créneau temporel entre la station réceptrice (5) et la station émettrice (1) ou l'autre station émettrice (2) suivante associée à la station réceptrice (5).

8. Procédé selon l'une des revendications précédentes, **caractérisé en ce qu'**un deuxième message est transmis avant le troisième message de la station réceptrice (5) vers la station émettrice (1) avec les informations de signalisation, lequel contient une information indiquant le mode ou les modes de préparation des données à envoyer par la station émettrice (1) qui est pris en charge ou qui sont pris en charge par la station réceptrice (5) en vue de la détection de ces données.

9. Procédé selon la revendication 8, **caractérisé en ce que** le mode de préparation des données à envoyer dans la station émettrice (1) en fonction du deuxième message est pris en charge par la station réceptrice (5) en vue de la détection de ces données.

10. Procédé selon la revendication 9, **caractérisé en ce que** les données à envoyer ainsi préparées sont transmises dans un canal de transmission qui est uniquement dédié à la liaison entre la station émettrice (1) et la station réceptrice (5).

11. Procédé selon la revendication 8, 9 ou 10, **caractérisé en ce que** les informations de signalisation sont transmises préparées en tant que données à envoyer par la station émettrice (1) vers la station réceptrice (5) au plus tôt lorsque le deuxième message permet de connaître au niveau de la station émettrice (1) le mode de préparation pris en charge par la station réceptrice (5) ou les modes de préparation pris en charge par la station réceptrice (5), la préparation étant alors effectuée dans un mode pris en charge par la station réceptrice (5), et lorsque le troisième message a été remis à la station réceptrice (5).

12. Procédé selon l'une des revendications précédentes, **caractérisé en ce qu'**un premier message est transmis avant le troisième message de la station émettrice (1) vers la station réceptrice (5) avec les informations de signalisation, lequel contient une information indiquant le mode ou les modes de préparation des données à envoyer qui est pris en charge ou qui sont pris en charge par la station émettrice (1).

13. Procédé selon la revendication 12, **caractérisé en ce que** le premier message est transmis dans un canal de transmission accessible à plusieurs stations réceptrices.

14. Procédé selon l'une des revendications précédentes, **caractérisé en ce que** les informations de signalisation sont transmises à la station réceptrice (5) au plus tôt après l'envoi du troisième message préparé par la station émettrice (1) ou par l'autre station émettrice (2) suivante associée à la station réceptrice (5) et que les informations de signalisation sont préalablement transmises dans un canal de transmission accessible à plusieurs stations réceptrices.

15. Station réceptrice (5), notamment station mobile, pour mettre en oeuvre toutes les étapes d'un procédé selon l'une des revendications précédentes, **caractérisée en ce que** des premiers moyens d'interprétation (20) sont prévus, lesquels interprètent un troisième message provenant d'une station émettrice (1), notamment une station de base, afin de déterminer si les données à envoyer par la station émettrice (1) ou par une autre station émettrice (2) suivante associée à la station réceptrice (5) ont été préparées par la station émettrice (1) ou par l'autre station émettrice (2) suivante associée à la station réceptrice (5) en vue d'accroître la qualité de réception par des mesures qui concernent un canal de transmission entre la station émettrice (1, 2) et la station réceptrice (5).

16. Station réceptrice (5) selon la revendication 15, **caractérisée en ce que** les premiers moyens d'interprétation (20) interprètent le troisième message afin de déterminer le mode suivant lequel les données à envoyer ont été préparées par la station émettrice (1) ou par l'autre station émettrice (2) suivante associée à la station réceptrice (5).

17. Station réceptrice (5) selon la revendication 15 ou 16, **caractérisée en ce que** des premiers moyens de sélection (25) sont prévus, lesquels sélectionnent en fonction du troisième message interprété par les premiers moyens d'interprétation (20) des moyens de détection (30, 35) qui permettent de réaliser une détection des données à envoyer par la station émettrice (1) ou par l'autre station émettrice (2) suivante associée à la station réceptrice (5).

18. Station réceptrice (5) selon la revendication 15, 16 ou 17, **caractérisée en ce que** des premiers moyens de génération de messages (40) sont prévus, lesquels génèrent un deuxième message en fonction du mode ou des modes de préparation pris en charge par la station réceptrice (5) pour les données à envoyer par la station émettrice (1), et le remettent à la station émettrice (1).

19. Station réceptrice (5) selon l'une des revendications 15 à 18, **caractérisée en ce que** les premiers moyens d'interprétation (20) interprètent un premier message de la station émettrice (1) en vue de déterminer le mode ou les modes de préparation des signaux à envoyer qui est/sont pris en charge par la station émettrice (1), que les premiers moyens d'interprétation (20) vérifient si ce mode ou ces modes de préparation est ou sont aussi pris en charge par la station réceptrice (5) et que les premiers moyens d'interprétation (20) commandent les premiers moyens de génération de messages (40) de manière à indiquer dans le deuxième message au moins un mode de préparation qui est pris en charge à la fois par la station émettrice (1) et par la station réceptrice (5).

20. Station émettrice (1), notamment station de base, pour mettre en oeuvre toutes les étapes d'un procédé selon l'une des revendications 1 à 14, **caractérisée en ce que** sont prévus des deuxièmes moyens de génération de message (45) qui génèrent un troisième message qui contient des informations indiquant si, dans la station émettrice (1) ou dans une autre station émettrice (2) suivante associée à la station réceptrice (5), est effectuée une préparation des données à envoyer en vue d'accroître la qualité de réception de ces données au niveau d'une station réceptrice (5), notamment une station mobile, par des mesures qui concernent un canal de transmission entre la station émettrice (1, 2) et la station réceptrice (5), et que les deuxièmes moyens de génération de message (45) remettent le troisième message à la station réceptrice (5).

21. Station émettrice (1) selon la revendication 20, **caractérisée en ce que** les deuxièmes moyens de génération de message (45) indiquent dans le troisième message le mode de préparation des données à envoyer qui est effectué dans la station émettrice (1) ou dans l'autre station émettrice (2) suivante associée à la station réceptrice (5).

22. Station émettrice (1) selon la revendication 20 ou 21, **caractérisée en ce que** les deuxièmes moyens de génération de message (45), avant de remettre le troisième message, génèrent un premier message qui contient des informations indiquant le mode pris en charge par la station émettrice (1) ou les modes pris en charge par la station émettrice (1) pour la préparation des données à envoyer par la station émettrice (1), et que les deuxièmes moyens de génération de message (45) remettent le premier message à la station réceptrice (5).

23. Station émettrice (1) selon la revendication 20, 21 ou 22, **caractérisée en ce que** sont prévus des deuxièmes moyens d'interprétation (50), lesquels interprètent un deuxième message provenant de la station réceptrice (5) afin de déterminer le mode ou les modes de préparation des signaux à envoyer qui sont pris en charge par la station réceptrice (5), que les deuxièmes moyens d'interprétation (50) vérifient si ce mode ou ces modes de préparation est ou sont également pris en charge par la station émettrice (1), que les deuxièmes moyens d'interprétation (50) sélectionnent au moins un mode de préparation qui est pris en charge à la fois par la station émettrice (1) et par la station réceptrice (5), que les deuxièmes moyens d'interprétation (50) commandent les deuxièmes moyens de génération de message (45) de manière à indiquer au moins un mode de préparation sélectionné dans le troisième message et que les deuxièmes moyens d'interprétation (50) commandent une unité de préparation (55) de telle sorte qu'elle prépare les données à envoyer conformément à l'au moins un mode sélectionné.

24. Station émettrice (1) selon la revendication 23, **caractérisée en ce que** l'unité de préparation (55) effectue une pré-distorsion, notamment une pré-distorsion commune.

25. Station émettrice (1) selon la revendication 23 ou 24, **caractérisée en ce que** l'unité de préparation (55) rayonne les signaux à envoyer par le biais de plusieurs antennes (15).

26. Procédé d'envoi d'un élément de message depuis une station émettrice (1), notamment une station de base, vers une station réceptrice (5), notamment une station mobile, notamment dans le cadre d'un échange d'informations de signalisation, **caractérisé en ce qu'**avec l'élément de message sont transmises des informations qui indiquent si les données à envoyer sont préparées par la station émettrice (1) ou par une autre station émettrice (2) suivante associée à la station réceptrice (5) en vue d'accroître la qualité de réception au niveau de la station réceptrice (5) par des mesures qui concernent un canal de transmission entre la station émettrice (1, 2) et la station réceptrice (5).

27. Procédé selon la revendication 26, **caractérisé en ce qu'**avec l'élément de message sont transmises des informations indiquant le mode ou les modes de préparation des signaux à envoyer.

28. Procédé d'envoi d'un élément de message depuis une station émettrice (1), notamment une station de base, vers une station réceptrice (5), notamment une station mobile, notamment dans le cadre d'un échange d'informations de signalisation, **caractérisé en ce qu'**avec l'élément de message sont transmises des informations qui indiquent le mode ou les modes de préparation des données à envoyer qui est ou sont pris en charge par la station émettrice (1) ou par une autre station émettrice (2) suivante associée à la station réceptrice (5) en vue d'accroître la qualité de réception au niveau de la station réceptrice (5) par des mesures qui concernent un canal de transmission entre la station émettrice (1, 2) et la station réceptrice (5).

29. Procédé d'envoi d'un élément de message depuis une station réceptrice (5), notamment une station mobile, vers une station émettrice (1), notamment une station de base, notamment dans le cadre d'un échange d'informations de signalisation, **caractérisé en ce qu'**avec l'élément de message sont transmises des informations qui indiquent le mode ou les modes de préparation des signaux à envoyer par la station émettrice (1) ou par une autre station émettrice (2) suivante associée à la station réceptrice (5) en vue d'accroître la qualité de réception au niveau de la station réceptrice (5) par des mesures qui concernent un canal de transmission entre la station émettrice (1, 2) et la station réceptrice (5) qui est ou sont pris en charge par la station réceptrice (5) lors de la détection de ces signaux.
